# EUROPEAN PATENT APPLICATION

(11) **EP 4 832 477 A1**
(43) Date of publication of application: **28.10.2026**
(21) Application number: 24916463.3
(22) Date of filing: 27.09.2024
(51) Int. Cl.: H04N 7/18, B60R 1/00, B60R 1/22, G06F 3/0484, G08G 1/16

(54) **ASSISTED DRIVING METHOD AND APPARATUS**

(30) Priority: 08.01.2024 CN 202410029970
(71) Applicant: Huawei Technologies Co., Ltd., Shenzhen, Guangdong 518129 (CN)
(72) Inventor: LU, Siyuan, Shenzhen, Guangdong 518129 (CN); WANG, Jiong, Shenzhen, Guangdong 518129 (CN); YIN, Hao, Shenzhen, Guangdong 518129 (CN); ZHENG, Zhaoyu, Shenzhen, Guangdong 518129 (CN); LI, Yaoyi, Shenzhen, Guangdong 518129 (CN)
(74) Representative: Gill Jennings & Every LLP
(86) International application number: PCT/CN2024/121728
(87) International publication number: WO 2025/148412

(57) **Abstract**

Provided are a driving assistance method and apparatus. The driving assistance method includes: obtaining multi-modal perception information, where the multi-modal perception information is collected by a plurality of sensors disposed on a vehicle (100); obtaining a plurality of groups of display information, where the display information includes a to-be-displayed target area and a grid granularity; performing perception prediction based on the multi-modal perception information and the plurality of groups of display information, to obtain a plurality of pieces of occupancy grid information, where the occupancy grid information is used to describe distribution of obstacles around the vehicle (100); and displaying a plurality of occupancy grid views on a human-machine interaction interface based on the plurality of pieces of occupancy grid information. According to this application, a panoramic perception capability of a driver for an obstacle in a large range can be improved, and a refined perception capability of the driver for an obstacle within a short distance can be improved. A combination of the two can improve a perception capability of the driver for a surrounding environment, and avoid scratching.

## Description

### TECHNICAL FIELD

This application relates to vehicle-mounted driving assistance technologies, and in particular, to a driving assistance method and apparatus.

### BACKGROUND

With the development of engineering technologies and the improvement of intelligent perception capabilities, vehicle-mounted driving assistance functions, such as reverse guide lines and vision-based park assist, have become standard configurations of various vehicles. However, in some specific scenarios, for example, parking in a narrow parking space, driving in a narrow lane, U-turn on a narrow road, vehicle meeting on a narrow road, automatic emergency braking (Automatic Emergency Braking, AEB), and rear automatic emergency braking (Rear Automatic Emergency Braking, RAEB), the current vehicle-mounted driving assistance functions fails to provide a driver with a good and safe driving assistance capability.

### SUMMARY

This application provides a driving assistance method and apparatus, to improve a perception capability of a driver for a surrounding environment, and avoid scratching.

According to a first aspect, this application provides a driving assistance method, including: obtaining multi-modal perception information, where the multi-modal perception information is collected by a plurality of sensors disposed on a vehicle; obtaining a plurality of groups of display information, where the display information includes a to-be-displayed target area and a grid granularity; performing perception prediction based on the multi-modal perception information and the plurality of groups of display information, to obtain a plurality of pieces of occupancy grid information, where the occupancy grid information is used to describe distribution of obstacles around the vehicle; and displaying a plurality of occupancy grid views on a human-machine interaction interface based on the plurality of pieces of occupancy grid information.

In this embodiment of this application, a plurality of occupancy grid views corresponding to a plurality of grid granularities are displayed on a central control screen of a vehicle, where the plurality of occupancy grid views display target areas in different ranges at different grid granularities. This can improve a panoramic perception capability of a driver for an obstacle in a large range, and can further improve a refined perception capability of a driver for an obstacle within a short distance. A combination of the two can improve a perception capability of the driver for a surrounding environment, and avoid scratching.

In this embodiment of this application, the driver may trigger the vehicle to start a low-speed travel and parking assistance function in any of the following manners:
1. The driver inputs a start instruction through a vehicle button or a central control screen of the vehicle.

In a possible implementation, a driving assistance mode button is disposed in the vehicle, and the driver may press the button to trigger starting of the low-speed travel and parking assistance function. It should be understood that a target function (for example, the low-speed travel and parking assistance function) may be started by pressing a button in a plurality of specific implementations, for example, pressing a button corresponding to the target function, or pressing a button briefly a plurality of times to switch to the target function in polling mode. This is not specifically limited in this embodiment of this application.

In a possible implementation, the central control screen displays a home screen, where the home screen includes an icon corresponding to the low-speed travel and parking assistance function, and the driver taps the icon to trigger starting of the low-speed travel and parking assistance function. It should be understood that a target function (for example, the low-speed travel and parking assistance function) may be started by using the central control screen (with a capability of a touchscreen) in a plurality of specific implementations, for example, directly tapping an icon of the target function, or selecting an option of the target function from a menu of the vehicle driving assistance mode. This is not specifically limited in this embodiment of this application.

2. The driver inputs the start instruction by voice.

In a possible implementation, the driver says "Please start the low-speed travel and parking assistance function" to a horn of an in-vehicle infotainment. When the in-vehicle infotainment receives and recognizes the semantic meaning of the voice, the low-speed travel and parking assistance function is started.

It should be noted that, in addition to the foregoing two manners, in this embodiment of this application, the vehicle may be triggered to start the low-speed travel and parking assistance function in another manner. This is not specifically limited herein.

After the vehicle starts the low-speed travel and parking assistance function, the in-vehicle infotainment may first obtain the multi-modal perception information. A plurality of sensors are disposed in the vehicle, including a camera sensor (a camera for short), a lidar sensor (a lidar for short), and a millimeter-wave radar sensor (a millimeter-wave radar for short). In this embodiment of this application, the multi-modal perception information may be obtained based on information collected by one or more of the foregoing plurality of sensors.

A group of display information may include a to-be-displayed target area and a grid granularity. The target area may be a range of a real-world area displayed on the central control screen. For example, in the real world, an area within 3 m around a vehicle (that is, an ego vehicle) is a square planar area of 6 m × 6 m centered on the vehicle (that is, the ego vehicle) and extending 3 m forward, 3 m backward, 3 m leftward, and 3 m rightward. The square planar area is superposed by a height of 2 m, to form a 6 m × 6 m × 2 m three-dimensional space. This three-dimensional space is the target area. A length, a width, and a height of the target area may be represented as W (length) × H (width) × D (height). To represent the target area, the ego vehicle may be used as an origin, and three-dimensional coordinates of eight vertices of the target area may be used to represent a range of the target area. Alternatively, three-dimensional coordinates of a vertex of the target area and a length, a width, and a height of the target area may be used to represent the range of the target area. A representation form of the range of the target area is not specifically limited in this embodiment of this application.

For the grid granularity, refer to the principle of an occupancy grid. In an occupancy grid, a three-dimensional space is divided into voxels, and each voxel is represented by a binary value of 0 or 1 to indicate whether the voxel is occupied. It can be seen that one voxel may correspond to one grid cell, and the grid granularity may be used to represent a granularity of voxel division of the three-dimensional space. For example, when a voxel has a size of 1 m × 1 m × 1 m, the foregoing 6 m × 6 m × 2 m three-dimensional space may be divided into 6 × 6 × 2 voxels, that is, the three-dimensional space corresponds to 6 × 6 × 2 grid cells.

Optionally, a larger range of the target area indicates a larger grid granularity that can be selected, and a smaller range of the target area indicates a smaller grid granularity that can be selected. In this way, more occupancy grid information can be displayed in a larger target area, and more detailed occupancy grid information can be displayed in a smaller target area.

In a possible implementation, in one group of display information, the target area may be an area within 6 m around the vehicle, that is, a length, a width, and a height of the target area are 12 m × 12 m × 2 m, and the grid granularity may be 20 cm.

In a possible implementation, in one group of display information, the target area may be an area within 3 m around the vehicle, that is, a length, a width, and a height of the target area are 6 m × 6 m × 2 m, and the grid granularity may be 5 cm.

In a possible implementation, in one group of display information, the target area may be an area within 1 m around the vehicle, that is, a length, a width, and a height of the target area are 2 m × 2 m × 2 m, and the grid granularity may be 2 cm.

In this embodiment of this application, a correspondence between the target area and the grid granularity may be pre-established (which may be used as a default recommended configuration), or the correspondence between the target area and the grid granularity may be determined in real time. This is not specifically limited herein.

In this embodiment of this application, the in-vehicle infotainment may obtain the display information in the following plurality of manners:
1. The display information is preset information.
   A plurality of groups of display information may be preset and stored. When the display information needs to be used, the in-vehicle infotainment may directly read a memory to obtain the plurality of groups of display information. For example, two groups of display information are set. In one group of display information, the target area is an area within 6 m around the vehicle, that is, a length, a width, and a height of the target area are 12 m × 12 m × 2 m, and the grid granularity is 20 cm. In the other group of display information, the target area is an area within 3 m around the vehicle, that is, a length, a width, and a height of the target area are 6 m × 6 m × 2 m, and the grid granularity is 5 cm.
2. The display information is dynamically generated based on an operation performed by the driver on the touchscreen.
   The zoom operation may include an operation of pressing the touchscreen by two fingers of the driver and sliding the two fingers outward or sliding the two fingers inward, and is used to change a range of the target area and target resolution of an obstacle. Alternatively, the zoom operation may include an operation of pressing the touchscreen by two fingers of the driver and performing rotation, translation, or dragging, and is used to change a display orientation and a range of the target area. For the foregoing operations, reference may be made to a zoom-in operation of pressing a related position by using a thumb and an index finger and then sliding the two fingers outward to zoom in on image details when a driver uses an image application; or a zoom-out operation of pressing a related position by using a thumb and an index finger and then sliding the two fingers inward to zoom out an image to view the entire image; or an operation of pressing a related position by using two fingers and then dragging the image to move or rotating the image to view image content in another direction.

In this embodiment of this application, a human-machine interaction interface is provided for a driver. The driver may autonomously zoom in/out the target area in an initial target area through the human-machine interaction interface, to obtain a final target area and a grid granularity corresponding to the target area. The initial target area and a grid granularity corresponding to the initial target area, and the final target area and the grid granularity corresponding to the final target area form the foregoing plurality of groups of display information.

In this embodiment of this application, the multi-modal perception information and the plurality of groups of display information may be input into a pre-trained perception prediction network, to output the plurality of pieces of occupancy grid information.

For the foregoing perception prediction network, refer to related content of a neural network in this application. For a principle and a specific implementation of the perception prediction network, refer to the content of the neural network. The perception prediction network may be pre-trained and downloaded to the in-vehicle infotainment. When the perception prediction network is used, a parameter in the perception prediction network may be updated based on input and output in real time, so that a prediction result of the perception prediction network is more accurate. In this way, occupancy grid information that better meets a driving condition can be obtained, to assist the driver in driving the vehicle more safely.

For a single group of display information (including a target area and a grid granularity), occupancy status and semantic information of grid cells at all coordinate positions in the target area are occupancy grid information corresponding to the display information. For example, for one group of display information (where the target area may be an area within 6 m around the vehicle, that is, a length, a width, and a height of the target area are 12 m × 12 m × 2 m, and the grid granularity may be 20 cm), occupancy status and semantic information of grid cells at all coordinate positions in the area within 6 m around the vehicle may be perceived and predicted, and the occupancy status of the grid cells is displayed at a grid granularity of 20 cm. Alternatively, for another group of display information (the target area may be an area within 3 m around the vehicle, that is, a length, a width, and a height of the target area are 6 m × 6 m × 2 m, and the grid granularity may be 5 cm), occupancy status and semantic information of grid cells at all coordinate positions in the area within 3 m around the vehicle may be perceived and predicted, and the occupancy status of the grid cells is displayed at a grid granularity of 5 cm.

In a possible implementation, the in-vehicle infotainment may display a first occupancy grid view on the central control screen, where the first occupancy grid view corresponds to a first target area and a first grid granularity; and display a second occupancy grid view, where the second occupancy grid view corresponds to a second target area and a second grid granularity, where a range of the first target area is greater than a range of the second target area, and the first grid granularity is greater than the second grid granularity.

Optionally, the first occupancy grid view includes grid cells corresponding to n1 obstacles, the second occupancy grid view includes grid cells corresponding to n2 obstacles, and both n1 and n2 are positive integers.

The first occupancy grid view displays a view of the first target area, and displays, at the first grid granularity, grid cells of n1 obstacles that are perceived and predicted in the first target area. The second occupancy grid view displays a view of the second target area, and displays, at the second grid granularity, grid cells of n2 obstacles that are perceived and predicted in the second target area.

Optionally, a grid cell of a first obstacle in the first occupancy grid view and a grid cell of a second obstacle in a second occupancy grid view are identified by using same information, the first obstacle and the second obstacle are a same obstacle, the n1 obstacles include the first obstacle, and the n2 obstacles include the second obstacle.

Both the first target area and the second target area are areas around the vehicle. A difference between the first target area and the second target area lies in a range. A range of the first target area is greater than a range of the second target area. Therefore, the first target area and the second target area may include a same obstacle. In other words, an obstacle in the second target area may also exist in the first target area, and some obstacles in the first target area may not appear in the second target area.

To facilitate identification by a driver, in this embodiment of this application, grid cells of different obstacles may be displayed in different colors, different wire frames, or the like, or grid cells of different obstacles are marked by using different information (for example, a text or a number). In this way, the driver can intuitively see a quantity, a position, a type, and the like of obstacles included in the target area, and take an avoidance measure in a timely manner.

Based on this, in the first occupancy grid view and the second occupancy grid view, grid cells corresponding to a same obstacle may be identified by using same information. For example, in the first occupancy grid view and the second occupancy grid view, grid cells of the first obstacle and the second obstacle are displayed in a same color (for example, a yellow grid cell) and a same frame (for example, a solid frame), or in the first occupancy grid view and the second occupancy grid view, grid cells of the first obstacle and the second obstacle (an obstacle that exists in both the first target area and the second target area) are marked by using same information (for example, a same text or a same number). The first obstacle and the second obstacle are a same obstacle. In this way, the driver can intuitively see which obstacles are the same in target areas in different ranges, and compare distribution and distances of obstacles in different fields of view, so as to take an avoidance measure in a timely manner.

Optionally, a grid cell of a third obstacle in the second occupancy grid view is identified by using specific information, and the third obstacle is the one closest to the vehicle among the n2 obstacles.

To facilitate identification by a driver, in this embodiment of this application, the grid cell of a nearest obstacle around a vehicle may be identified by using specific information. For example, the grid cell of the nearest obstacle is highlighted by using a special color (red), or the grid cell of the nearest obstacle is displayed in a blinking manner, or a text is used to mark the nearest obstacle near the grid cell of the nearest obstacle as the nearest obstacle, or a distance between the nearest obstacle and the vehicle is marked by using a number near the grid cell of the nearest obstacle. Further, when the distance between the vehicle and the nearest obstacle is less than a specified threshold (for example, 0.5 m), the vehicle issues a synchronized warning through the sound and the light.

It should be noted that in this embodiment of this application, the grid cell of the obstacle may be alternatively displayed in another manner. This is not specifically limited herein.

In a possible implementation, the view of the human-machine interaction interface may be displayed on a terminal device (for example, a mobile phone or a tablet) of a driver, so that the driver synchronously views distribution of obstacles around the vehicle and driving status of the vehicle.

In this embodiment of this application, the driver may install an application for driving assistance on the terminal device, and interconnection between the in-vehicle infotainment and the terminal device may be implemented through the application. The in-vehicle infotainment may transmit, to the terminal device in real time, a view displayed on the in-vehicle infotainment, and the driver may see the view displayed on the in-vehicle infotainment by opening the application for driving assistance.

In addition, the human-machine interaction interface provided by the application for driving assistance may also enable a user to perform an operation on a view, for example, zooming in/out a view, or changing a view direction.

In a possible implementation, the human-machine interaction interface in this embodiment of this application further includes controls for selecting driving modes, and the driving modes include a travel mode and a parking mode. Therefore, two controls "Travel" and "Parking" are provided on the human-machine interaction interface.

In the travel mode, the human-machine interaction interface further includes controls for selecting assistance modes, and the assistance modes include an automatic mode and a manual mode. In this case, two controls "Auto" and "Manual" are provided on the human-machine interaction interface.

In the parking mode, the human-machine interaction interface further includes controls for selecting assistance modes, and the assistance modes include an automatic mode, a manual mode, an automated valet parking (Automated Valet Parking, AVP) mode, and an automatic parking assist (Auto Parking Assist, APA) mode. In this case, four controls "Auto", "Manual", "AVP", and "APA" are provided on the human-machine interaction interface. The automatic mode and the manual mode may be selected in a human driving situation (that is, a driver drives a vehicle). The APA mode and the AVP mode may be selected in an intelligent driving situation (that is, the driver starts automatic driving, and the vehicle autonomously completes a parking instruction. In this case, the driver may be in the vehicle or outside the vehicle). In the APA mode, an automatic parking function may be started. In a parking space parking process, for display logic of a panoramic occupancy display area, refer to the automatic mode in the human driving situation.

Optionally, the vehicle may display, on the central control screen at a plurality of grid granularities, occupancy grid conditions and semantic information of an obstacle around the vehicle. In addition, in a travel and parking process of the vehicle, the vehicle adaptively adjusts a fineness of the human-machine interaction interface in real time according to environmental changes, so that the driver takes a preventive measure in advance to avoid scratching.

Optionally, the driver may manually determine the target area, and the vehicle may display, on the central control screen at a plurality of grid granularities, occupancy grid conditions and semantic information of obstacles around the vehicle, so that an area in which the driver is interested can be displayed in a refined manner. In addition, in a travel and parking process of the vehicle, the vehicle adaptively adjusts a fineness of the human-machine interaction interface in real time according to environmental changes, so that the driver takes a preventive measure in advance to avoid scratching.

Optionally, panoramic perception may be performed on an entire garage/parking lot based on a change of a vehicle posture, to provide effective static environment information of all scenarios for parking or automatic parking of the driver.

According to a second aspect, this application provides a driving assistance apparatus, including: a collection module, configured to obtain multi-modal perception information, where the multi-modal perception information is collected by a plurality of sensors disposed on a vehicle; an obtaining module, configured to obtain a plurality of groups of display information, where the display information includes a to-be-displayed target area and a grid granularity; a prediction module, configured to perform perception prediction based on the multi-modal perception information and the plurality of groups of display information, to obtain a plurality of pieces of occupancy grid information, where the occupancy grid information is used to describe distribution of obstacles around the vehicle; and a display module, configured to display a plurality of occupancy grid views on a human-machine interaction interface based on the plurality of pieces of occupancy grid information.

In a possible implementation, the display module is specifically configured to: display a first occupancy grid view, where the first occupancy grid view corresponds to a first target area and a first grid granularity; and display a second occupancy grid view, where the second occupancy grid view corresponds to a second target area and a second grid granularity, where a range of the first target area is greater than a range of the second target area, and the first grid granularity is greater than the second grid granularity.

In a possible implementation, the first occupancy grid view includes grid cells corresponding to n1 obstacles, the second occupancy grid view includes grid cells corresponding to n2 obstacles, and both n1 and n2 are positive integers.

In a possible implementation, a grid cell of a first obstacle in the first occupancy grid view and a grid cell of a second obstacle in the second occupancy grid view are identified by using same information, the first obstacle and the second obstacle are a same obstacle, the n1 obstacles include the first obstacle, and the n2 obstacles all include the second obstacle.

In a possible implementation, a grid cell of a third obstacle in the second occupancy grid view is identified by using specific information, and the third obstacle is the one closest to the vehicle among the n2 obstacles.

In a possible implementation, the display module is further configured to display a panoramic occupancy grid view on the human-machine interaction interface based on panoramic occupancy grid information, where the panoramic occupancy grid information is obtained based on historical occupancy grid information of a driving environment of the vehicle and a driving trajectory of the vehicle.

In a possible implementation, the display information is preset information.

In a possible implementation, the display information is dynamically generated based on an operation performed by a driver on a touchscreen.

In a possible implementation, the operation includes at least one of the following operations: an operation of pressing the touchscreen by two fingers of the driver and sliding the two fingers outward or sliding the two fingers inward; or an operation of pressing the touchscreen by two fingers of the driver and performing rotation, translation, or dragging.

In a possible implementation, the human-machine interaction interface further includes a control for selecting a driving mode, and the driving mode includes one or more of the following modes: a travel mode or a parking mode.

In a possible implementation, in the travel mode, the human-machine interaction interface further includes a control for selecting an assistance mode, and the assistance mode includes one or more of the following modes: an automatic mode or a manual mode.

In a possible implementation, in the parking mode, the human-machine interaction interface further includes a control for selecting an assistance mode, and the assistance mode includes one or more of the following modes: an automatic mode, a manual mode, an automated valet parking AVP mode, or an automatic parking assist APA mode.

In a possible implementation, the prediction module is specifically configured to input the multi-modal perception information and the plurality of groups of display information into a pre-trained perception prediction network, to output the plurality of pieces of occupancy grid information.

In a possible implementation, functions implemented by the perception prediction network include: multi-modal feature fusion based on the multi-modal perception information; feature fusion based on a time sequence; and perception prediction based on the display information.

In a possible implementation, the perception prediction network includes one or more of the following networks: a pinhole network, a fisheye network, a point cloud network, or a multi-modal fusion network based on the multi-modal perception information. The pinhole network is configured to extract a visual feature and a spatial feature of a pinhole image collected by a pinhole camera, to obtain a pinhole 3D image feature. The fisheye network is configured to extract a visual feature and a spatial feature of a fisheye image collected by a fisheye camera, to obtain a fisheye 3D image feature. The point cloud network is configured to extract a 3D voxel feature corresponding to lidar and/or millimeter-wave radar data, to obtain a point cloud voxel feature. The multi-modal fusion network is configured to perform weighted fusion on the pinhole 3D image feature, the fisheye 3D image feature, and the point cloud voxel feature.

In a possible implementation, the perception prediction network further includes a temporal fusion network, where the temporal fusion network is configured to align, based on motion parameters of the vehicle, multi-frame 3D spatial features in a time sequence to a same coordinate system, and then perform multi-frame weighted fusion.

In a possible implementation, the perception prediction network further includes a feature enhancement network, and the feature enhancement network is configured to perform multi-scale feature fusion and a plurality of times of upsampling on a 3D spatial feature map, and re-fuse image features to implement auxiliary feature enhancement.

In a possible implementation, the perception prediction network further includes a dynamic resolution prediction network based on feedback of the display information, where the dynamic resolution prediction network is configured to perform cropping sampling and weighted fusion on a 3D spatial feature map with multi-scale resolution based on a target area and a grid granularity that are selected on the human-machine interaction interface, obtain a position feature through interpolation, and then predict occupancy and semantic information based on the position feature, to implement prediction of any resolution.

In a possible implementation, the plurality of sensors include a pinhole camera and a fisheye camera.

In a possible implementation, the plurality of sensors further include a lidar and/or a millimeter-wave radar.

According to a third aspect, this application provides an electronic device, including: one or more processors; and a memory, configured to store one or more programs. When the one or more programs are executed by the one or more processors, the one or more processors are enabled to implement the method according to any one of the implementations of the first aspect.

According to a fourth aspect, this application provides a computer-readable storage medium, including a computer program. When the computer program is executed on a computer, the computer is enabled to perform the method according to any one of the implementations of the first aspect.

According to a fifth aspect, this application provides a computer program product. The computer program product includes computer program code. When the computer program code is run on a computer, the computer is enabled to perform the method according to any one of the implementations of the first aspect.

### BRIEF DESCRIPTION OF DRAWINGS

FIG. 1 is an example of a functional block diagram of a vehicle 100 according to an embodiment of this application;
FIG. 2 is an example of a functional block diagram of a vehicle-mounted driving assistance system according to an embodiment of this application;
FIG. 3 is a block diagram of a software structure of an in-vehicle infotainment according to an embodiment of this application;
FIG. 4 is a schematic flowchart of a process 400 of a driving assistance method according to an embodiment of this application;
FIG. 5 is a schematic flowchart of a perception prediction process according to an embodiment of this application;
FIG. 6 is a diagram of a human-machine interaction interface of a central control screen according to an embodiment of this application;
FIG. 7 is a diagram of switching a display angle of view of a human-machine interaction interface according to an embodiment of this application;
FIG. 8 is a diagram of a refined mode according to an embodiment of this application;
FIG. 9 is a diagram of a human-machine interaction interface of a central control screen according to an embodiment of this application;
FIG. 10 is a diagram of a refined mode according to an embodiment of this application;
FIG. 11 and FIG. 12 are diagrams of a zoom operation in a manual mode according to an embodiment of this application;
FIG. 13 is a diagram of a human-machine interaction interface of a central control screen according to an embodiment of this application; and
FIG. 14 is a diagram of a structure of a driving assistance apparatus 1400 according to this application.

### DESCRIPTION OF EMBODIMENTS

To make objectives, technical solutions, and advantages of this application clearer, the following clearly and completely describes the technical solutions in this application with reference to the accompanying drawings in this application. It is clear that the described embodiments are merely some rather than all of embodiments of this application. All other embodiments obtained by a person of ordinary skill in the art based on embodiments of this application without creative efforts shall fall within the protection scope of this application.

In the specification, embodiments, claims, and accompanying drawings of this application, the terms "first", "second", and the like are merely intended for distinguishing and description, and shall not be understood as indicating or implying relative importance, or indicating or implying a sequence. In addition, the terms "include", "have", and any variant thereof are intended to cover non-exclusive inclusion, for example, include a series of steps or units. For example, a method, system, product, or device is not necessarily limited to those steps or units expressly listed, but may include other steps or units not expressly listed or inherent to such a process, method, product, or device.

It should be understood that in this application, "at least one (item)" refers to one or more and "a plurality of' refers to two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. The expression "at least one of the following items (pieces)" or a similar expression means any combination of these items, including a single item (piece) or any combination of a plurality of items (pieces). For example, at least one of a, b, or c may indicate a, b, c, a and b, a and c, b and c, or a, b, and c, where a, b, and c may be singular or plural.

Before the technical solutions in the embodiments of this application are described, the vehicle in the embodiments of this application is first described with reference to the accompanying drawings.

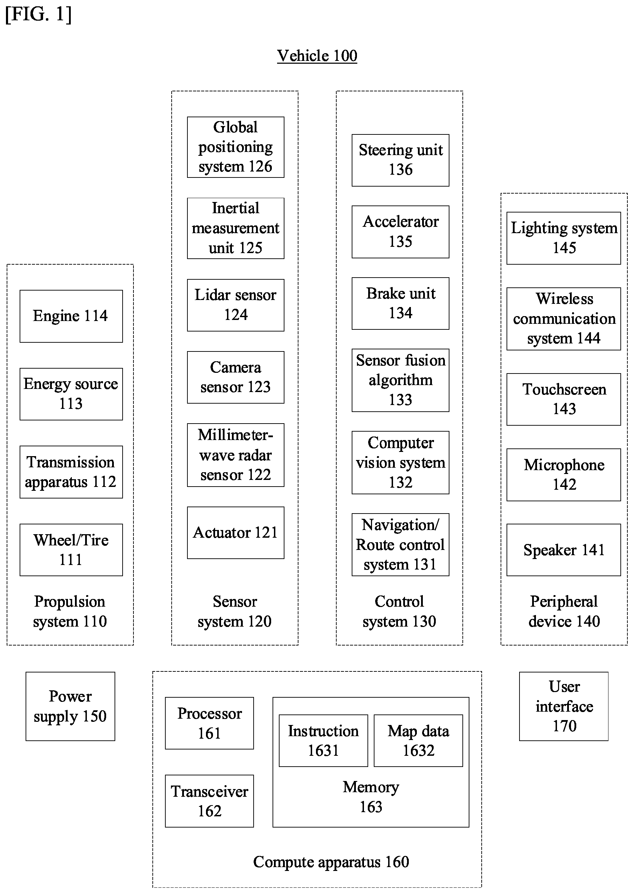

FIG. 1 is an example of a functional block diagram of a vehicle 100 according to an embodiment of this application. As shown in FIG. 1, components coupled to or included in the vehicle 100 may include a propulsion system 110, a sensor system 120, a control system 130, a peripheral device 140, a power supply 150, a compute apparatus 160, and a driver interface 170. The components of the vehicle 100 may be configured to work in a manner of interconnection with each other and/or interconnection with other components coupled to various systems. For example, the power supply 150 may supply power to all components of the vehicle 100. The compute apparatus 160 may be configured to receive data from the propulsion system 110, the sensor system 120, the control system 130, and the peripheral device 140, and control the propulsion system 110, the sensor system 120, the control system 130, and the peripheral device 140. The compute apparatus 160 may be further configured to generate display of an image on the driver interface 170 and receive input from the driver interface 170.

It should be noted that, in another example, the vehicle 100 may include more, fewer, or different systems, and each system may include more, fewer, or different components. In addition, the shown systems and components may be combined or split in any manner. This is not specifically limited in this application.

The compute apparatus 160 may include a processor 161, a transceiver 162, and a memory 163. The compute apparatus 160 may be a controller of the vehicle 100 or a part of the controller. The memory 163 may store an instruction 1631 run on the processor 161, to execute various function applications and data processing of the vehicle 100, may further store data (for example, map data 1632) created in a process of using the vehicle 100, and may further store an operating system (for example, an embedded operating system such as Android (Android), an Apple mobile platform (iOS), a Microsoft Windows operating system (Windows), or a Unix-like operating system (Linux)), an application required by at least one function, and the like. The processor 161 included in the compute apparatus 160 may include one or more general-purpose processors and/or one or more dedicated processors (for example, an image processor or a digital signal processor). If the processor 161 includes more than one processor, the processors may work independently or work in combination. The compute apparatus 160 may implement a function of controlling the vehicle 100 based on the input received by the driver interface 170. The transceiver 162 is configured to perform communication between the compute apparatus 160 and each system. The memory 163 may further include one or more volatile storage components and/or one or more non-volatile storage components, such as an optical, magnetic, and/or organic storage apparatus. The memory 163 may be integrated with the processor 161 in whole or in part. The memory 163 may include the instruction 1631 (for example, program logic) that is run by the processor 161, to run various vehicle functions, including any one of the functions or methods described in this specification.

The propulsion system 110 may be configured to provide powered motion for the vehicle 100. As shown in FIG. 1, the propulsion system 110 may include an engine 114, an energy source 113, a transmission (transmission) 112, and a wheel/tire 111. In addition, the propulsion system 110 may additionally or alternatively include another component other than the components shown in FIG. 1. This is not specifically limited in this application.

The sensor system 120 may include several sensors configured to sense information about an environment in which the vehicle 100 is located. As shown in FIG. 1, sensors of the sensor system 120 include a global positioning system (Global Positioning System, GPS) 126, an inertial measurement unit (Inertial Measurement Unit, IMU) 125, a lidar sensor 124, a camera sensor 123, a millimeter-wave radar sensor 122, and an actuator 121 configured to modify a position and/or an orientation of a sensor. The GPS 126 may be any sensor configured to estimate a geographic position of the vehicle 100. Therefore, the GPS 126 may include a transceiver, to estimate a position of the vehicle 100 relative to the earth based on satellite positioning data. In an example, the compute apparatus 160 may be configured to estimate, by using the GPS 126 in combination with the map data 1632, a road on which the vehicle 100 travels. The IMU 125 may be configured to sense position and orientation changes of the vehicle 100 based on inertial acceleration and any combination thereof. In some examples, a combination of sensors in the IMU 125 may include an accelerometer and a gyroscope. In addition, another combination of sensors in the IMU 125 is also possible. The lidar sensor 124 may be considered as an object detection system, and the sensor detects, through optical sensing, an object in the environment in which the vehicle 100 is located. Usually, the lidar sensor 124 may use an optical remote sensing technology in which a distance to a target or another attribute of the target is measured by illuminating the target by using light. For example, the lidar sensor 124 may include a laser source and/or a laser scanner configured to transmit a laser pulse, and a detector configured to receive reflection of the laser pulse. For example, the lidar sensor 124 may include a laser rangefinder based on reflection by a rotation mirror, and perform laser scanning around a digital scene in one dimension or two dimensions, to collect distance measurement values from a specified angle at a specified interval. In an example, the lidar sensor 124 may include components such as a light (for example, laser) source, a scanner, an optical system, an optical detector, and a receiver or an electronic component, and a position and navigation system. The lidar sensor 124 determines a distance to an object by scanning a laser reflected from the object, and may form a 3D environmental diagram with centimeter-level precision. The camera sensor 123 may include any camera (for example, a pinhole camera, a fisheye camera, a static camera, or a video camera) configured to obtain an image of an environment in which the vehicle 100 is located. Therefore, the camera sensor 123 may be configured to detect visible light, or may be configured to detect light from another part (such as infrared light or ultraviolet light) of a spectrum. Another type of camera sensor 123 is also possible. The camera sensor 123 may be a two-dimensional detector, or may have a three-dimensional space range detection function. In some examples, the camera sensor 123 may be, for example, a distance detector, configured to generate a two-dimensional image indicating distances from the camera sensor 123 to several points in the environment. Therefore, the camera sensor 123 may use one or more distance detection technologies. For example, the camera sensor 123 may be configured to use a structured light technology, where the vehicle 100 illuminates an object in the environment using a predetermined light pattern, such as a grid or a checkerboard pattern, and detects reflection of the predetermined light pattern from the object using the camera sensor 123. Based on distortion in a reflected light pattern, the vehicle 100 may be configured to detect a distance to a point on the object. The predetermined light pattern may include infrared light or light of another wavelength. The millimeter-wave radar (Millimeter-Wave Radar) sensor 122 is usually an object detection sensor with a wavelength of 1 mm to 10 mm and a frequency range of approximately 10 GHz to 200 GHz. A measurement value of the millimeter-wave radar sensor 122 has depth information that can provide the distance to the target. In addition, the millimeter-wave radar sensor 122 has an obvious Doppler effect, and is very sensitive to a speed. Therefore, a speed of the target may be directly obtained, and the speed of the target may be extracted by detecting a Doppler frequency shift of the target. Currently, two frequency bands mainly used by the vehicle-mounted millimeter-wave radar are 24 GHz and 77 GHz. A wavelength of the 24 GHz frequency band is about 1.25 cm and is mainly used for short-range sensing, such as sensing a surrounding environment of a vehicle or a blind spot, parking assistance, or lane change assistance. A wavelength of the 77 GHz frequency band is about 4 mm and is used for medium- and long-distance measurement, such as automatic following, adaptive cruise control (ACC), and automatic emergency braking (AEB).

The sensor system 120 may also include additional sensors, including, for example, sensors that monitor an internal system of the vehicle 100 (for example, an O₂ monitor, a fuel gauge, an engine oil temperature gauge, or the like). The sensor system 120 may further include another sensor. This is not specifically limited in this application.

The control system 130 may be configured to control operations of both the vehicle 100 and the components of the vehicle 100. Therefore, the control system 130 may include a steering unit 136, an accelerator 135, a brake unit 134, a sensor fusion algorithm 133, a computer vision system 132, and a navigation/route control system 131. The control system 130 may additionally or alternatively include another component other than the components shown in FIG. 1. This is not specifically limited in this application.

The peripheral device 140 may be configured to allow the vehicle 100 to interact with an external sensor, another vehicle, and/or a driver. Therefore, the peripheral device 140 may include, for example, a lighting system 145, a wireless communication system 144, a touchscreen 143, a microphone 142, and/or a speaker 141. The peripheral device 140 may additionally or alternatively include another component other than the components shown in FIG. 1. This is not specifically limited in this application.

The power supply 150 may be configured to supply power to some or all components of the vehicle 100. Therefore, the power supply 150 may include, for example, a rechargeable lithium-ion or lead-acid battery. In some examples, one or more battery groups may be configured to supply power. Other power materials and configurations are also possible. In some examples, the power supply 150 and the energy source 113 may be implemented together, as in some pure electric vehicles.

The components of the vehicle 100 may be configured to work in a manner of interconnection with other components inside and/or outside their respective systems. Therefore, the components and systems of the vehicle 100 may be communicatively linked together through a system bus, a network, and/or another connection mechanism.

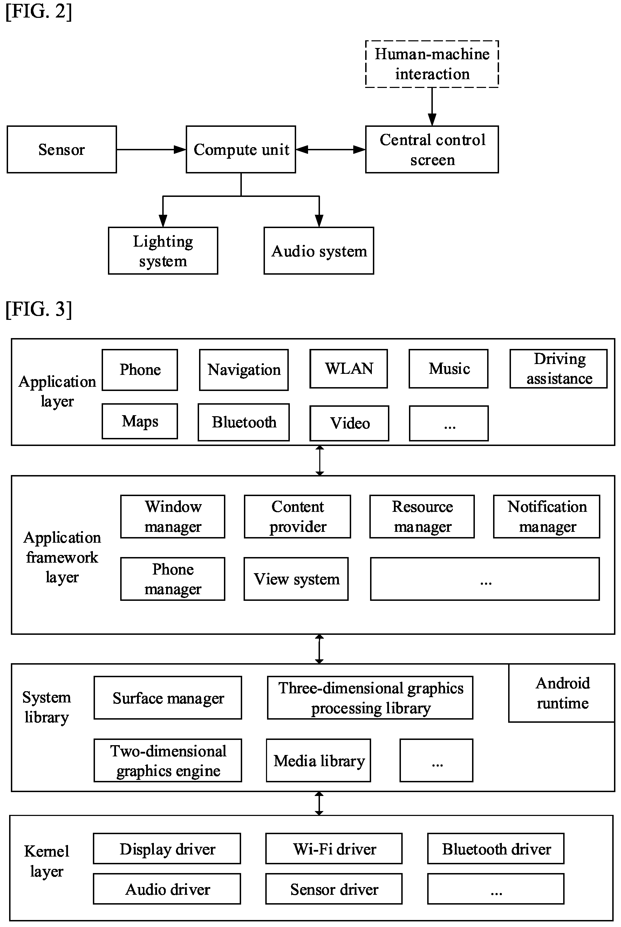

FIG. 2 is an example of a functional block diagram of a vehicle-mounted driving assistance system according to an embodiment of this application. As shown in FIG. 2, components coupled to the vehicle-mounted driving assistance system or included in the vehicle-mounted driving assistance system may include a compute unit, a sensor, a central control screen, a lighting system, and an audio system. The compute unit corresponds to the control system 130 in the embodiment shown in FIG. 1. The sensor corresponds to the sensor system 120 in the embodiment shown in FIG. 1, and mainly relates to the camera sensor 123 (including a pinhole camera and a fisheye camera), the millimeter-wave radar sensor 122, and the lidar sensor 124. The central control screen corresponds to the touchscreen 143 in the embodiment shown in FIG. 1, and provides a human-machine interaction interface for a driver. The lighting system corresponds to the lighting system 145 in the embodiment shown in FIG. 1, and the audio system corresponds to the speaker 141 in the embodiment shown in FIG. 1.

The vehicle-mounted driving assistance system in this embodiment of this application may also be referred to as an in-vehicle infotainment, a vehicle central control system (central control for short), or the like. This is not specifically limited herein.

FIG. 3 is a block diagram of a software structure of an in-vehicle infotainment according to an embodiment of this application.

In a layered architecture of the in-vehicle infotainment, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom.

The application layer may include a series of application packages.

As shown in FIG. 3, the application package may include applications such as Call, Map, Navigation, WLAN, Bluetooth, Music, Video, and Driving assistance.

The application framework layer provides an application programming interface (application programming interface, API) and a programming framework for applications at the application layer. The application framework layer includes some predefined functions.

As shown in FIG. 3, the application framework layer may include a window manager, a content provider, a view system, a phone manager, a resource manager, a notification manager, or the like.

The window manager is configured to manage a window program. The window manager may obtain a size of the display, determine whether there is a status bar, lock the screen, capture the screen, or the like.

The content provider is configured to store and obtain data, and enable the data to be accessed by an application. The data may include a video, a map, audio, calls made and answered, or the like.

The view system includes visual controls such as a control for displaying a text and a control for displaying an image. The view system may be configured to construct an application. The human-machine interaction interface may include one or more views. For example, a human-machine interaction interface including a notification icon may include a view for displaying a text and a view for displaying an image.

The phone manager is configured to provide a communication function of the in-vehicle infotainment, for example, call status management (including accepting and declining).

The resource manager provides various resources such as a localized character string, an icon, an image, a layout file, and a video file for an application.

The notification manager enables an application to display notification information in a status bar, and may be configured to convey a notification message. The displayed notification information may automatically disappear after a short pause without requiring driver interaction. For example, the notification manager is configured to notify download completion, give a message notification, or the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert tone is made, or an indicator blinks.

The Android runtime includes a kernel library and a virtual machine. The Android runtime is responsible for scheduling and management of the Android system.

The kernel library includes two parts: a function that needs to be called in java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, or the like.

The 2D graphics engine is a drawing engine for 2D drawing.

The kernel layer is a layer between hardware and software. The kernel layer includes at least a display driver, a camera driver, an audio driver, and a sensor driver.

It can be understood that components included in the system framework layer, the system library, and the runtime layer that are shown in FIG. 3 do not constitute any specific limitation on the in-vehicle infotainment. In some other embodiments of this application, the in-vehicle infotainment may include more or fewer components than those shown in the figure, or combine some components, or split some components, or have different component arrangements.

Embodiments of this application relate to application of a neural network. For ease of understanding, the following first explains some nouns or terms used in embodiments of this application. The nouns or terms are also used as a part of contents of the present invention.

### (1) Neural network

The neural network (Neural Network, NN) is a machine learning model. The neural network may include neurons. The neuron may be an operation unit that uses xs and an intercept of 1 as inputs, where an output of the operation unit may be as follows:${h}_{W , b} \left(x\right) = f \left({W}^{T}x\right) = f \left({\sum }_{s = 1}^{n}{W}_{s}{x}_{s}+b\right)$ (1-1)

s=1, 2, ..., n, n is a natural number greater than 1, *Wₛ* is a weight of *xₛ,* and b is an offset of a neuron. f is an activation function (activation functions) of the neuron, and is used to introduce a nonlinear feature into the neural network, to convert an input signal in the neuron into an output signal. The output signal of the activation function may serve as an input of a next convolution layer. The activation function may be a sigmoid function. The neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

### (2) Deep neural network

The deep neural network (deep neural network, DNN), also referred to as a multi-layer neural network, may be understood as a neural network with many hidden layers. There is no special measurement standard for "many" herein. The DNN is divided based on positions of different layers, and a neural network in the DNN may be divided into three types: an input layer, a hidden layer, and an output layer. Generally, the first layer is the input layer, the last layer is the output layer, and the middle layer is the hidden layer. Layers are fully connected. To be specific, any neuron at the i^{th} layer is necessarily connected to any neuron at the (i+1)^{th} layer. Although the DNN seems complex, it is not complex in terms of work at each layer, which may be simply understood as the following linear relationship expression: y̅ = α(Wx̅ + b̅), where x̅ is an input vector, y̅ is an output vector, b is an offset vector, W is a weight matrix (also referred to as a coefficient), and α() is an activation function. At each layer, only such a simple operation is performed on the input vector x̅ to obtain the output vector y̅. Because the DNN includes a large quantity of layers, there are a large quantity of coefficients W and a large quantity of offset vectors b. Definitions of these parameters in the DNN are as follows: The coefficient W is used as an example. It is assumed that in a three-layer DNN, a linear coefficient from the fourth neuron at the second layer to the second neuron at the third layer is defined as ${w}_{24}^{3}$. The superscript 3 represents the layer where the coefficient W is located, and the subscript corresponds to an output third-layer index 2 and an input second-layer index 4. In conclusion, a coefficient from the k^{th} neuron at the (L-1)^{th} layer to the j^{th} neuron at the L^{th} layer is defined as ${W}_{jk}^{L}$. It should be noted that there is no parameter W at the input layer. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors W at many layers).

### (3) Convolutional neural network

The convolutional neural network (convolutional neuron network, CNN) is a deep neural network with a convolutional structure, and a deep learning (deep learning) architecture. In the deep learning architecture, multi-layer learning is performed at different abstract levels according to a machine learning algorithm. As a deep learning architecture, the CNN is a feed-forward (feed-forward) artificial neural network. Each neuron in the feed-forward artificial neural network may respond to an image input to the feed-forward artificial neural network. The convolutional neural network includes a feature extractor constituted by a convolutional layer and a pooling layer. The feature extractor may be considered as a filter. A convolution process may be considered as using a trainable filter to perform convolution on an input image or a convolutional feature map (feature map).

The convolutional layer is a neuron layer that is in the convolutional neural network and at which convolution processing is performed on an input signal. The convolutional layer may include a plurality of convolution operators. The convolution operator is also referred to as a kernel. In image processing, the convolution operator functions as a filter that extracts specific information from an input image matrix. The convolution operator may essentially be a weight matrix, and the weight matrix is usually predefined. In a process of performing a convolution operation on an image, the weight matrix is usually used to process pixels at a granularity level of one pixel (or two pixels, depending on a value of a stride stride) in a horizontal direction on an input image, to extract a specific feature from the image. A size of the weight matrix should be related to a size of the image. It should be noted that a depth dimension (depth dimension) of the weight matrix is the same as a depth dimension of the input image. During a convolution operation, the weight matrix extends to an entire depth of the input image. Therefore, a convolutional output of a single depth dimension is generated through convolution with a single weight matrix. However, in most cases, a single weight matrix is not used, but a plurality of weight matrices with a same size (rows × columns), that is, a plurality of same-type matrices, are applied. Outputs of the weight matrices are stacked to form a depth dimension of a convolutional image. The dimension herein may be understood as being determined based on the foregoing "plurality". Different weight matrices may be used to extract different features from the image. For example, one weight matrix is used to extract edge information of the image, another weight matrix is used to extract a specific color of the image, and still another weight matrix is used to blur unnecessary noise in the image. Sizes of the plurality of weight matrices (rows × columns) are the same. Sizes of feature maps extracted from the plurality of weight matrices with the same size are also the same, and then the plurality of extracted feature maps with the same size are combined to form an output of the convolution operation. Weight values in these weight matrices need to be obtained through a large amount of training in actual application. Each weight matrix including weight values obtained through training may be used to extract information from the input image, so that the convolutional neural network performs correct prediction. When the convolutional neural network has a plurality of convolutional layers, a large quantity of general features are usually extracted at an initial convolutional layer. The general feature may also be referred to as a low-level feature. As a depth of the convolutional neural network increases, a feature extracted at a subsequent convolutional layer is more complex, for example, a high-level semantic feature. A feature with higher-level semantics is more applicable to a to-be-resolved problem.

A quantity of training parameters often needs to be reduced. Therefore, a pooling layer often needs to be periodically introduced after a convolutional layer. One convolutional layer may be followed by one pooling layer, or a plurality of convolutional layers may be followed by one or more pooling layers. During image processing, the pooling layer is only used to reduce a space size of the image. The pooling layer may include an average pooling operator and/or a maximum pooling operator, to perform sampling on the input image to obtain an image with a small size. The average pooling operator may be used perform calculation on pixel values in the image in a specific range, to generate an average value, and the average value is used as an average pooling result. The maximum pooling operator may be used to select a pixel with a maximum value in a specific range as a maximum pooling result. In addition, similar to that the size of the weight matrix at the convolutional layer needs to be related to the size of the image, an operator at the pooling layer also needs to be related to the size of the image. A size of a processed image output from the pooling layer may be less than a size of an image input to the pooling layer. Each pixel in the image output from the pooling layer represents an average value or a maximum value of a corresponding sub-region of the image input to the pooling layer.

After processing by the convolutional layer/pooling layer, the convolutional neural network is still insufficient to output required output information, because as described above, the convolutional layer/pooling layer only extracts features and reduce parameters brought by the input image. However, to generate final output information (required class information or other related information), the convolutional neural network needs to use the neural network layer to generate an output of one required type or a group of required types. Therefore, the convolutional neural network layer may include a plurality of hidden layers, and parameters included in the plurality of hidden layers may be obtained through pre-training based on related training data of a specific task type. For example, the task type may include image recognition, image classification, and super-resolution image reconstruction.

Optionally, after the plurality of hidden layers in the neural network layer, an output layer of the entire convolutional neural network is further included. The output layer has a loss function similar to a categorical cross entropy, and the loss function is specifically used to calculate a prediction error. Once forward propagation of the entire convolutional neural network is completed, reverse propagation is started to update a weight value and a deviation of each layer mentioned above, to reduce a loss of the convolutional neural network and an error between a result output by the convolutional neural network via the output layer and an ideal result.

### (4) Recurrent neural network

The recurrent neural network (recurrent neural networks, RNN) is used to process sequence data. In a conventional neural network model, layers from an input layer to a hidden layer and then to an output layer are fully connected, but nodes at each layer are not connected. Such a common neural network resolves many problems, but is still incapable of resolving many other problems. For example, to predict a next word in a sentence, a previous word usually needs to be used, because the previous word and the next word in the sentence are not independent. A reason why the RNN is referred to as the recurrent neural network is that a current output of a sequence is also related to a previous output of the sequence. A specific representation form is that the network memorizes previous information and applies the previous information to calculation of the current output. To be specific, nodes at the hidden layer are no longer unconnected but are connected to each other, and an input of the hidden layer not only includes an output of the input layer, but also includes an output of the hidden layer at a previous moment. Theoretically, the RNN can process sequence data of any length. Training for the RNN is the same as training for a conventional CNN or DNN. An error back propagation algorithm is also used, but there is a difference: If the RNN is expanded, a parameter such as W of the RNN is shared. This is different from the conventional neural network described in the foregoing example. In addition, during use of a gradient descent algorithm, an output in each step depends not only on a network in a current step, but also on network status in several previous steps. The learning algorithm is referred to as a back propagation through time (Back propagation Through Time, BPTT) algorithm.

Why is the recurrent neural network still needed when the convolutional neural network is available? A reason is simple. In the convolutional neural network, there is a premise that elements are independent of each other, and input and output are also independent, such as a cat and a dog. However, in the real world, many elements are connected to each other. For example, stocks change over time. For another example, a person says: "I like traveling, and my favorite place is Yunnan. I will go there when I have a chance." Herein, people should know that the person will go to "Yunnan". A reason is that the people can deduce the answer based on content of the context. However, how can a machine do this? The RNN emerges. The RNN is intended to make the machine capable of memorizing like a human. Therefore, an output of the RNN needs to depend on current input information and historical memorized information.

### (5) Loss function

In a process of training the deep neural network, because it is expected that an output of the deep neural network is as much as possible close to a predicted value that is actually expected, a predicted value of a current network and a target value that is actually expected may be compared, and then a weight vector of each layer of the neural network is updated based on a difference between the predicted value and the target value (certainly, there is usually an initialization process before the first update, to be specific, parameters are preconfigured for all layers of the deep neural network). For example, if the predicted value of the network is high, the weight vector is adjusted to decrease the predicted value, and adjustment is continuously performed, until the deep neural network can predict the target value that is actually expected or a value that is very close to the target value that is actually expected. Therefore, "how to compare the difference between the predicted value and the target value" needs to be predefined. This is the loss function (loss function) or an objective function (objective function). The loss function and the objective function are important equations used to measure the difference between the predicted value and the target value. The loss function is used as an example. A higher output value (loss) of the loss function indicates a larger difference. Therefore, training of the deep neural network is a process of minimizing the loss as much as possible.

### (6) Back propagation algorithm

The convolutional neural network may correct a value of a parameter in an initial super-resolution model in a training process according to an error back propagation (back propagation, BP) algorithm, so that an error loss of reconstructing the super-resolution model becomes smaller. Specifically, an input signal is transferred forward until an error loss occurs at an output, and the parameter in the initial super-resolution model is updated based on back propagation error loss information, to make the error loss converge. The back propagation algorithm is a back propagation motion dominated by error loss, which is intended to obtain a parameter of the super-resolution model, such as a weight matrix.

### (7) Generative adversarial network

The generative adversarial network (generative adversarial network, GAN) is a deep learning model. The model includes at least two modules: one is a generative model (generative model), and the other is a discriminative model (discriminative model). The two modules are trained in an adversarial manner to generate better output. Both the generative model and the discriminative model may be neural networks, specifically deep neural networks or convolutional neural networks. A basic principle of the GAN is as follows: Using a GAN for generating an image as an example, it is assumed that there are two networks, G (Generator) and D (Discriminator). G is a network for generating an image. G receives random noise z, and generates the image from the noise, where the image is denoted as G(z). D is a discriminator network used to determine whether an image is "real". An input parameter of D is x, x represents an image, and an output D(x) represents a probability that x is a real image. If a value of D(x) is 1, it indicates that the image is 100% real. If the value of D(x) is 0, it indicates that the image cannot be real. During a training process of the generative adversarial network, an objective of the generative network G is to generate an image that is as real as possible to deceive the discriminative network D, while an objective of the discriminative network D is to distinguish the image generated by G from a real image as much as possible. In this way, G and D form a dynamic "adversarial" process, which is the "adversary" aspect in the "generative adversarial network". Ideally, a final result of the adversarial process is that G may generate an image G(z) that is nearly indistinguishable from a real image, and it is difficult for D to determine whether the image generated by G is real, that is, D(G(z)) = 0.5. In this way, an excellent generative model G is obtained, which can be used to generate images.

In a complex road condition and driving process, there are some scenarios that have a high requirement on a driving technology or have a high driving difficulty, for example, parking in a narrow parking space, passing on a narrow road, U-turn on a narrow road, vehicle meeting on a narrow road, automatic emergency braking (Automatic Emergency Braking, AEB), and rear automatic emergency braking (Rear Automatic Emergency Braking, RAEB). For the foregoing scenarios, an assistance system (for example, 360-degree panoramic view) on some vehicles may not be able to effectively identify and display a nearby obstacle (including an object, a pedestrian, another vehicle, or the like), therefore cannot provide information about the nearby obstacle for a driver, and cannot provide a good safe driving assistance capability for the driver. To resolve this problem, this application provides a driving assistance method and apparatus.

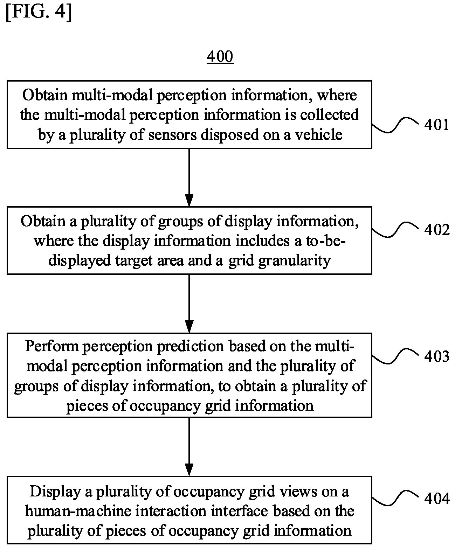

FIG. 4 is a schematic flowchart of a process 400 of a driving assistance method according to an embodiment of this application. The process 400 may be performed by the vehicle 100 (especially the in-vehicle infotainment in the vehicle) as described above. The process 400 may be used for a low-speed travel and parking assistance function in vehicle driving assistance. The process 400 is described as a series of steps or operations. It should be understood that the process 400 may be performed in various sequences and/or simultaneously, and is not limited to an execution sequence shown in FIG. 4. The process 400 may include the following steps.

Step 401: Obtain multi-modal perception information, where the multi-modal perception information is collected by a plurality of sensors disposed on a vehicle.

In this embodiment of this application, a driver may trigger the vehicle to start a low-speed travel and parking assistance function in any of the following manners:
1. The driver inputs a start instruction through a vehicle button or a central control screen of the vehicle.

In a possible implementation, a driving assistance mode button is disposed in the vehicle, and the driver may press the button to trigger starting of the low-speed travel and parking assistance function. It should be understood that a target function (for example, the low-speed travel and parking assistance function) may be started by pressing a button in a plurality of specific implementations, for example, pressing a button corresponding to the target function, or pressing a button briefly a plurality of times to switch to the target function in polling mode. This is not specifically limited in this embodiment of this application.

In a possible implementation, the central control screen displays a home screen, where the home screen includes an icon corresponding to the low-speed travel and parking assistance function, and the driver taps the icon to trigger starting of the low-speed travel and parking assistance function. It should be understood that a target function (for example, the low-speed travel and parking assistance function) may be started by using the central control screen (with a capability of a touchscreen) in a plurality of specific implementations, for example, directly tapping an icon of the target function, or selecting an option of the target function from a menu of the vehicle driving assistance mode. This is not specifically limited in this embodiment of this application.

2. The driver inputs the start instruction by voice.

In a possible implementation, the driver says "Please start the low-speed travel and parking assistance function" to a horn of an in-vehicle infotainment. When the in-vehicle infotainment receives and recognizes the semantic meaning of the voice, the low-speed travel and parking assistance function is started.

It should be noted that, in addition to the foregoing two manners, in this embodiment of this application, the vehicle may be triggered to start the low-speed travel and parking assistance function in another manner. This is not specifically limited herein.

After the vehicle starts the low-speed travel and parking assistance function, the in-vehicle infotainment may first obtain the multi-modal perception information.

Referring to the embodiment shown in FIG. 1, a plurality of sensors are disposed in the vehicle, including a camera sensor (a camera for short), a lidar sensor (a lidar for short), and a millimeter-wave radar sensor (a millimeter-wave radar for short).

The camera may include any camera (for example, a pinhole camera, a fisheye camera, a static camera, or a video camera) configured to obtain an image of an environment in which the vehicle is located. Therefore, the camera may be configured to detect visible light, or may be configured to detect light from another part (such as infrared light or ultraviolet light) of a spectrum. Other types of cameras are also possible. The camera may be a two-dimensional detector, or may have a three-dimensional space range detection function. In some examples, the camera may be, for example, a distance detector, configured to generate a two-dimensional image indicating distances from the camera to several points in the environment. Therefore, the camera may use one or more distance detection technologies. For example, the camera may be configured to use a structured light technology, where the vehicle illuminates an object in the environment using a predetermined light pattern, such as a grid, and detects reflection of the predetermined light pattern from the object using the camera. Based on distortion in a reflected light pattern, the vehicle may be configured to detect a distance to a point on the object. The predetermined light pattern may include infrared light or light of another wavelength.

The lidar may be considered as an object detection system, and the sensor detects, through optical sensing, an object in the environment in which the vehicle is located. Usually, the lidar may use an optical remote sensing technology in which a distance to a target or another attribute of the target is measured by illuminating the target by using light. For example, the lidar may include a laser source and/or a laser scanner configured to transmit a laser pulse, and a detector configured to receive reflection of the laser pulse. For example, the lidar may include a laser rangefinder based on reflection by a rotation mirror, and perform laser scanning around a digital scene in one dimension or two dimensions, to collect distance measurement values from a specified angle at a specified interval. In an example, the lidar may include components such as a light (for example, laser) source, a scanner, an optical system, an optical detector, and a receiver or an electronic component, and a position and navigation system. The lidar determines a distance to an object by scanning a laser reflected from the object, and may form a 3D environmental diagram with precision of up to a centimeter level. The millimeter-wave radar is usually an object detection sensor with a wavelength of 1 mm to 10 mm and a frequency range of approximately 10 GHz to 200 GHz.

A measurement value of the millimeter-wave radar has depth information that can provide the distance to the target. In addition, the millimeter-wave radar has an obvious Doppler effect, and is very sensitive to a speed. Therefore, a speed of the target may be directly obtained, and the speed of the target may be extracted by detecting a Doppler frequency shift of the target. Currently, two frequency bands mainly used by the vehicle-mounted millimeter-wave radar are 24 GHz and 77 GHz. A wavelength of the 24 GHz frequency band is about 1.25 cm and is mainly used for short-range sensing, such as sensing a surrounding environment of a vehicle or a blind spot, parking assistance, or lane change assistance. A wavelength of the 77 GHz frequency band is about 4 mm and is used for medium- and long-distance measurement, such as automatic following, adaptive cruise control (ACC), and automatic emergency braking (AEB).

In this embodiment of this application, the multi-modal perception information may be obtained based on information collected by one or more of the foregoing plurality of sensors.

Step 402: Obtain a plurality of groups of display information, where the display information includes a to-be-displayed target area and a grid granularity.

A group of display information may include a to-be-displayed target area and a grid granularity. The target area may be a range of a real-world area displayed on the central control screen. For example, in the real world, an area within 3 m around a vehicle (that is, an ego vehicle) is a square planar area of 6 m × 6 m centered on the vehicle (that is, the ego vehicle) and extending 3 m forward, 3 m backward, 3 m leftward, and 3 m rightward. The square planar area is superposed with a height of 2 m to form a three-dimensional space of 6 m × 6 m × 2 m. This three-dimensional space is the target area. A length, a width, and a height of the target area may be represented as W (length) × H (width) × D (height). To represent the target area, the ego vehicle may be used as an origin, and three-dimensional coordinates of eight vertices of the target area may be used to represent a range of the target area. Alternatively, three-dimensional coordinates of a vertex of the target area and a length, a width, and a height of the target area may be used to represent the range of the target area. A representation form of the range of the target area is not specifically limited in this embodiment of this application.

For the grid granularity, refer to the principle of an occupancy grid. In an occupancy grid, a three-dimensional space is divided into voxels, and each voxel is represented by a binary value of 0 or 1 to indicate whether the voxel is occupied. It can be seen that one voxel may correspond to one grid cell, and the grid granularity may be used to represent a granularity of voxel division of the three-dimensional space. For example, when a voxel has a size of 1 m × 1 m × 1 m, the foregoing 6 m × 6 m × 2 m three-dimensional space may be divided into 6 × 6 × 2 voxels, that is, the three-dimensional space corresponds to 6 × 6 × 2 grid cells.

Optionally, a larger range of the target area indicates a larger grid granularity that can be selected, and a smaller range of the target area indicates a smaller grid granularity that can be selected. In this way, more occupancy grid information can be displayed in a larger target area, and more detailed occupancy grid information can be displayed in a smaller target area.

In a possible implementation, in one group of display information, the target area may be an area within 6 m around the vehicle, that is, a length, a width, and a height of the target area are 12 m × 12 m × 2 m, and the grid granularity may be 20 cm.

In a possible implementation, in one group of display information, the target area may be an area within 3 m around the vehicle, that is, a length, a width, and a height of the target area are 6 m × 6 m × 2 m, and the grid granularity may be 5 cm.

In a possible implementation, in one group of display information, the target area may be an area within 1 m around the vehicle, that is, a length, a width, and a height of the target area are 2 m × 2 m × 2 m, and the grid granularity may be 2 cm.

In this embodiment of this application, a correspondence between the target area and the grid granularity may be pre-established (which may be used as a default recommended configuration), or the correspondence between the target area and the grid granularity may be determined in real time. This is not specifically limited herein.

In this embodiment of this application, the in-vehicle infotainment may obtain the display information in the following plurality of manners:
1. The display information is preset information.
   A plurality of groups of display information may be preset and stored. When the display information needs to be used, the in-vehicle infotainment may directly read a memory to obtain the plurality of groups of display information. For example, two groups of display information are set. In one group of display information, the target area is an area within 6 m around the vehicle, that is, a length, a width, and a height of the target area are 12 m × 12 m × 2 m, and the grid granularity is 20 cm. In the other group of display information, the target area is an area within 3 m around the vehicle, that is, a length, a width, and a height of the target area are 6 m × 6 m × 2 m, and the grid granularity is 5 cm.
2. The display information is dynamically generated based on an operation performed by the driver on the touchscreen.

The zoom operation may include an operation of pressing the touchscreen by two fingers of the driver and sliding the two fingers outward or sliding the two fingers inward, and is used to change a range of the target area and target resolution of an obstacle. Alternatively, the zoom operation may include an operation of pressing the touchscreen by two fingers of the driver and performing rotation, translation, or dragging, and is used to change a display orientation and a range of the target area. For the foregoing operations, reference may be made to a zoom-in operation of pressing a related position by using a thumb and an index finger and then sliding the two fingers outward to zoom in on image details when a driver uses an image application; or a zoom-out operation of pressing a related position by using a thumb and an index finger and then sliding the two fingers inward to zoom out an image to view the entire image; or an operation of pressing a related position by using two fingers and then dragging the image to move or rotating the image to view image content in another direction.

In this embodiment of this application, a human-machine interaction interface is provided for a driver. The driver may autonomously zoom in/out the target area in an initial target area through the human-machine interaction interface, to obtain a final target area and a grid granularity corresponding to the target area. The initial target area and a grid granularity corresponding to the initial target area, and the final target area and the grid granularity corresponding to the final target area form the foregoing plurality of groups of display information.

Step 403: Perform perception prediction based on the multi-modal perception information and the plurality of groups of display information, to obtain a plurality of pieces of occupancy grid information.

In this embodiment of this application, the multi-modal perception information and the plurality of groups of display information may be input into a pre-trained perception prediction network, to output the plurality of pieces of occupancy grid information.

For the foregoing perception prediction network, refer to the foregoing content of the neural network. For a principle and a specific implementation of the perception prediction network, refer to the content of the neural network. The perception prediction network may be pre-trained and downloaded to the in-vehicle infotainment. When the perception prediction network is used, a parameter in the perception prediction network may be updated based on input and output in real time, so that a prediction result of the perception prediction network is more accurate. In this way, occupancy grid information that better meets a driving condition can be obtained, to assist the driver in driving the vehicle more safely.

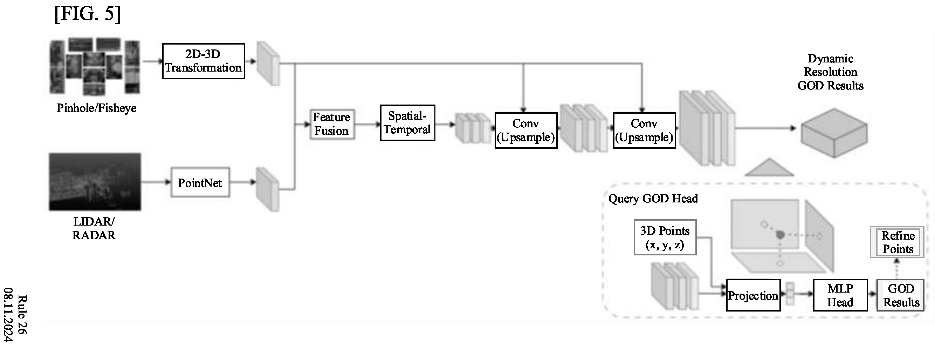

For example, FIG. 5 is a schematic flowchart of a perception prediction process according to an embodiment of this application. As shown in FIG. 5, the perception prediction process (corresponding to a perception prediction network) includes the following steps:
(1) Multi-modal perception information obtained by an in-vehicle infotainment includes M pinhole images (from a pinhole camera) and N fisheye images (from a fisheye camera). Feature extraction is separately performed on the M pinhole images and the N fisheye images, and an image feature is transformed from an angle of view of a 2D perspective view (Perspective View, PV) to 3D space based on a pose calibrated by a camera that collects each image.
   In other words, the perception prediction network includes a pinhole network and a fisheye network that are based on the multi-modal perception information. The pinhole network is configured to extract a visual feature and a spatial feature of a pinhole image collected by a pinhole camera, to obtain a pinhole 3D image feature. The fisheye network is configured to extract a visual feature and a spatial feature of a fisheye image collected by a fisheye camera, to obtain a fisheye 3D image feature.
   a. The pinhole image and the fisheye image may have different resolutions. Therefore, the pinhole image and the fisheye image are separated, and feature extraction is performed separately. In the M pinhole images, feature extraction may be further separately performed, based on positions (for example, in front of a vehicle, behind a vehicle, and a vehicle side) of the pinhole cameras, on pinhole images collected by the pinhole cameras. In the N fisheye images, feature extraction may also be separately performed, based on positions (for example, in front of a vehicle, behind a vehicle, and on a side of a vehicle) of the fisheye cameras, on fisheye images collected by the fisheye cameras.
      The foregoing feature extraction on the image may be based on a convolutional neural network (CNN) method, for example, a residual network (Resnet) or a feature pyramid network (FPN), or may be based on a transformer-based (Transformer) method, for example, a visual transformer (Vision Transformer).
   b. Based on feature extraction, a feature map pv_feat of a unified PV angle of view is obtained, and dimensions are C × H × W, where C is a quantity of feature channels, and H and W are image sizes.
   c. Consistent with step a, monocular depth estimation is performed on depth structure information of the image by using a neural network model, so as to obtain a depth distribution map of the image, where a dimension is D × H × W, and D is a quantity of categories of the depth distribution.
   d. Weighted mapping (for example, broadcast multiplication) is performed on the pv_feat by using the depth distribution map to obtain a depth visual feature map, where a dimension is C × D × H × W. In addition, features in the depth visual feature map are projected to different positions in the 3D space based on internal and external parameter information of the camera (for example, information such as a position and a focal length of the camera), to obtain a 3D feature map, where a dimension is C1 × X × Y × Z, where X, Y, and Z are a length, a width, and a height in the three-dimensional space.
   Referring to the foregoing steps a to b, the M pinhole images and the N fisheye images may be separately processed to obtain respective 3D feature maps. It should be noted that dimensions of 3D feature maps obtained from different frames of images may be completely the same, or may not be completely the same, or may be completely different. This is not specifically limited herein.
(2) The multi-modal perception information obtained by the in-vehicle infotainment includes a laser point cloud (from a lidar) and a millimeter-wave point cloud (from a millimeter-wave radar), and feature extraction is separately performed on the laser point cloud and the millimeter-wave point cloud.
   In other words, the perception prediction network includes a point cloud network based on the multi-modal perception information. The point cloud network is configured to extract a 3D voxel feature corresponding to lidar and/or millimeter-wave radar data, to obtain a point cloud voxel feature.
   a. For a laser point cloud, a correspondence between a point cloud and a grid (that is, a correspondence between a 3D point in the point cloud and X, Y, and Z in the three-dimensional space) is used to perform voxelization. Each voxel may include a point cloud feature such as a quantity of point clouds, a maximum height of a 3D point, a minimum height of a 3D point, and point cloud reflection intensity, and then a convolution operation is performed to obtain a lidar (lidar) feature map.
   b. For a millimeter-wave point cloud, a correspondence between a point cloud and a grid (that is, a correspondence between a 3D point in the point cloud and X, Y, and Z in the three-dimensional space) is used to perform voxelization, and then a convolution operation is performed to obtain a millimeter-wave radar (radar) feature map.
   c. Feature fusion (for example, splicing and addition) is performed on the lidar feature map and the radar feature map to obtain a radar feature map. A dimension is C2 × X × Y × Z.
(3) Multi-modal feature fusion is performed on the 3D feature map, the lidar feature map, and the radar feature map in the same three-dimensional space.

In other words, the perception prediction network includes a multi-modal fusion network based on the multi-modal perception information. The multi-modal fusion network is configured to perform weighted fusion on the pinhole 3D image feature, the fisheye 3D image feature, and the point cloud voxel feature.
a. Perform weighted fusion on the 3D feature maps respectively corresponding to the M pinhole images and the N fisheye images, to obtain a 3D feature map of the image.
b. The radar feature map and the image 3D feature map are fused to obtain a fused 3D spatial feature map.

The foregoing steps are corresponding to a function of feature fusion based on a time sequence of the perception prediction network. It should be noted that, in addition to the foregoing steps, the function may be implemented in another manner. This is not specifically limited herein.

(4) Further time sequence alignment and spatial feature extraction are performed on the features of the fused 3D spatial feature map.

In other words, the perception prediction network further includes a temporal fusion network, where the temporal fusion network is configured to align, based on motion parameters of the vehicle, multi-frame 3D spatial features in a time sequence to a same coordinate system, and then perform multi-frame weighted fusion.
a. For the fused 3D spatial feature map of a current frame and the 3D spatial feature map of a historical T-1 frame, perform coordinate conversion on the 3D feature of the historical frame based on the vehicle motion parameter (ego motion), so that the 3D feature of the historical frame and the 3D feature of the current moment are in a same coordinate system, to obtain 3D spatial feature maps of a T frame that are aligned in the same coordinate system.
b. The 3D spatial feature maps of the T frame are fused into a 3D spatial feature map of the current frame according to a time sequence.
c. A multi-stage feature extractor is used to extract a spatial feature of the 3D spatial feature map of the current frame again, to obtain an enhanced 3D spatial feature map.

The foregoing steps correspond to a function of multi-modal feature fusion based on the multi-modal perception information in the perception prediction network. It should be noted that, in addition to the foregoing steps, the function may be implemented in another manner. This is not specifically limited herein.

(5) The enhanced 3D spatial feature map performs a plurality of times of upsampling, and the image features are fused again to perform auxiliary feature enhancement.

In other words, the perception prediction network further includes a feature enhancement network. The feature enhancement network is configured to perform multi-scale feature fusion and a plurality of times of upsampling on the 3D spatial feature map, and re-fuse image features to implement the auxiliary feature enhancement.
a. Perform the plurality of times of upsampling on the enhanced 3D spatial feature map, to obtain a plurality of resolutions corresponding to the plurality of grid granularities.
b. Perform the plurality of times of upsampling on the image 3D feature map, to obtain a plurality of resolutions corresponding to the plurality of grid granularities.
c. Perform weighted fusion on the features of the enhanced 3D spatial feature map after upsampling and the 3D feature map of the image after upsampling under the same resolution, to obtain a 3D spatial feature map under the resolution.

(6) Perform cropping, sampling, and weighted fusion on the 3D spatial feature maps with multi-scale resolution based on a target area and a grid granularity, and obtain a position feature through interpolation, to achieve arbitrary resolution.

In other words, the perception prediction network further includes a dynamic resolution prediction network based on feedback of display information, where the dynamic resolution prediction network is configured to perform cropping sampling and weighted fusion on a 3D spatial feature map with multi-scale resolution based on a target area and a grid granularity that are selected on a human-machine interaction interface, obtain a position feature through interpolation, and then predict occupancy and semantic information based on the position feature, to implement prediction of any resolution.
a. Calculate relative coordinates of the target area in an entire 3D feature space, and perform cropping on the 3D spatial feature maps with multi-scale resolution according to the relative coordinates.
b. Generate, based on a grid granularity (that is, a resolution corresponding to the grid granularity), coordinates of all positions that need to be predicted and that are occupied in the target area.
c. Perform feature sampling and weighted fusion on a cropped multi-scale resolution 3D spatial feature map according to the coordinates of the position to be predicted, where the feature sampling is obtained by trilinear interpolation of adjacent features on the feature map.

(7) Multi-layer perceptron (Multilayer Perceptron, MLP) prediction is performed on all the obtained position features, so as to output occupancy status and semantic information of a grid cell at a corresponding coordinate position, where the occupancy status is binary prediction, that is, only occupied and non-occupied classes are included, and the semantic information is multi-class prediction, including a road surface, a moving target, another obstacle, or the like.

For a single group of display information (including a target area and a grid granularity), occupancy status and semantic information of grid cells at all coordinate positions in the target area are occupancy grid information corresponding to the display information. For example, for one group of display information (where the target area may be an area within 6 m around the vehicle, that is, a length, a width, and a height of the target area are 12 m × 12 m × 2 m, and the grid granularity may be 20 cm), occupancy status and semantic information of grid cells at all coordinate positions in the area within 6 m around the vehicle may be perceived and predicted, and the occupancy status of the grid cells is displayed at a grid granularity of 20 cm. Alternatively, for another group of display information (the target area may be an area within 3 m around the vehicle, that is, a length, a width, and a height of the target area are 6 m × 6 m × 2 m, and the grid granularity may be 5 cm), occupancy status and semantic information of grid cells at all coordinate positions in the area within 3 m around the vehicle may be perceived and predicted, and the occupancy status of the grid cells is displayed at a grid granularity of 5 cm.

The foregoing steps correspond to a function of perception prediction based on the display information of the perception prediction network. It should be noted that, in addition to the foregoing steps, the function may be implemented in another manner. This is not specifically limited herein.

It should be noted that the embodiment shown in FIG. 5 describes only one perception prediction implementation method. In this embodiment of this application, the perception prediction may be performed by using another method. This is not specifically limited herein.

Step 404: Display a plurality of occupancy grid views on a human-machine interaction interface based on the plurality of pieces of occupancy grid information.

In a possible implementation, the in-vehicle infotainment may display a first occupancy grid view on the central control screen, where the first occupancy grid view corresponds to a first target area and a first grid granularity; and display a second occupancy grid view, where the second occupancy grid view corresponds to a second target area and a second grid granularity, where a range of the first target area is greater than a range of the second target area, and the first grid granularity is greater than the second grid granularity.

Optionally, the first occupancy grid view includes grid cells corresponding to n1 obstacles, the second occupancy grid view includes grid cells corresponding to n2 obstacles, and both n1 and n2 are positive integers.

The first occupancy grid view displays a view of the first target area, and displays, at the first grid granularity, grid cells of n1 obstacles that are perceived and predicted in the first target area. The second occupancy grid view displays a view of the second target area, and displays, at the second grid granularity, grid cells of n2 obstacles that are perceived and predicted in the second target area.

Optionally, a grid cell of a first obstacle in the first occupancy grid view and a grid cell of a second obstacle in a second occupancy grid view are identified by using same information, the first obstacle and the second obstacle are a same obstacle, the n1 obstacles include the first obstacle, and the n2 obstacles include the second obstacle.

Both the first target area and the second target area are areas around the vehicle. A difference between the first target area and the second target area lies in a range. A range of the first target area is greater than a range of the second target area. Therefore, the first target area and the second target area may include a same obstacle. In other words, an obstacle in the second target area may also exist in the first target area, and some obstacles in the first target area may not appear in the second target area.

To facilitate identification by a driver, in this embodiment of this application, grid cells of different obstacles may be displayed in different colors, different wire frames, or the like, or grid cells of different obstacles are marked by using different information (for example, a text or a number). In this way, the driver can intuitively see a quantity, a position, a type, and the like of obstacles included in the target area, and take an avoidance measure in a timely manner.

Based on this, in the first occupancy grid view and the second occupancy grid view, grid cells corresponding to a same obstacle may be identified by using same information. For example, in the first occupancy grid view and the second occupancy grid view, grid cells of the first obstacle and the second obstacle are displayed in a same color (for example, a yellow grid cell) and a same frame (for example, a solid frame), or in the first occupancy grid view and the second occupancy grid view, grid cells of the first obstacle and the second obstacle (an obstacle that exists in both the first target area and the second target area) are marked by using same information (for example, a same text or a same number). The first obstacle and the second obstacle are a same obstacle. In this way, the driver can intuitively see which obstacles are the same in target areas in different ranges, and compare distribution and distances of obstacles in different fields of view, so as to take an avoidance measure in a timely manner.

Optionally, a grid cell of a third obstacle in the second occupancy grid view is identified by using specific information, and the third obstacle is the one closest to the vehicle among the n2 obstacles.

To facilitate identification by a driver, in this embodiment of this application, a grid cell of a nearest obstacle around a vehicle may be identified by using specific information. For example, the grid cell of the nearest obstacle is highlighted by using a special color (red), or the grid cell of the nearest obstacle is displayed in a blinking manner, or a text is used to mark the nearest obstacle near the grid cell of the nearest obstacle as the nearest obstacle, or a distance between the nearest obstacle and the vehicle is marked by using a number near the grid cell of the nearest obstacle. Further, when the distance between the vehicle and the nearest obstacle is less than a specified threshold (for example, 0.5 m), the vehicle issues a synchronized warning through the sound and the light.

It should be noted that in this embodiment of this application, the grid cell of the obstacle may be alternatively displayed in another manner. This is not specifically limited herein.

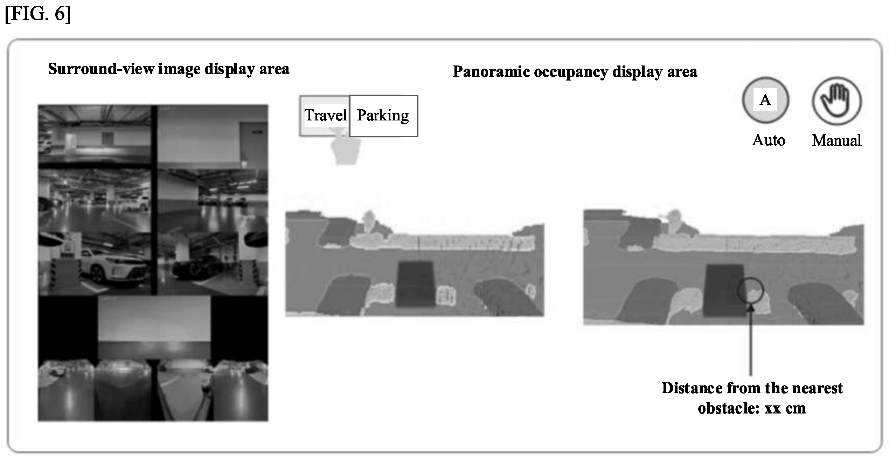

For example, FIG. 6 is a diagram of a human-machine interaction interface of a central control screen according to an embodiment of this application. As shown in FIG. 6, the human-machine interaction interface includes a surround-view image display area and a panoramic occupancy display area.

The surround-view image display area mainly displays image information collected by a pinhole camera and a fisheye camera around a vehicle.

The panoramic occupancy display area consists of two areas: left and right. The left area displays a wide-range target area and coarse-grained occupancy grid perception information. This area provides a complete distribution of surrounding obstacles for the driver. The right area displays a small-range target area and fine-grained occupancy grid perception information. This area provides a refined outline of a nearby obstacle for the driver, and intuitively displays a distance between the vehicle and the nearby obstacle.

The left area corresponds to the first occupancy grid view, and the right area corresponds to the second occupancy grid view.

The foregoing two occupancy grid views display target areas in two ranges at different grid granularities. The wide-range target area can improve a panoramic perception capability of the driver for an obstacle in a large range, and the small-range target area can improve a refined perception capability of the driver for an obstacle in a short range. A combination of the two can improve a perception capability of the driver for a surrounding environment, and avoid scratching.

It should be noted that, in the foregoing embodiment, two occupancy grid views are used as an example for description. In this embodiment of this application, a quantity of occupancy grid views displayed on the central control screen is not specifically limited, and may be equal to or greater than two. Each occupancy grid view corresponds to one piece of display information, that is, one target area is displayed at a grid granularity.

In a possible implementation, the view of the human-machine interaction interface may be displayed on a terminal device (for example, a mobile phone or a tablet) of a driver, so that the driver synchronously views distribution of obstacles around the vehicle and driving status of the vehicle.

In this embodiment of this application, the driver may install an application for driving assistance on the terminal device, and interconnection between the in-vehicle infotainment and the terminal device may be implemented through the application. When performing step 404, the in-vehicle infotainment may transmit, to the terminal device in real time, a view displayed on the in-vehicle infotainment, and the driver may see the view displayed on the in-vehicle infotainment by opening the application for driving assistance. Refer to the embodiment shown in FIG. 6.

In addition, the human-machine interaction interface provided by the application for driving assistance may also enable a user to perform an operation on a view, for example, zooming in/out a view, or changing a view direction.

In this embodiment of this application, a plurality of occupancy grid views corresponding to a plurality of grid granularities are displayed on a central control screen of a vehicle, where the plurality of occupancy grid views display target areas in different ranges at different grid granularities. This can improve a panoramic perception capability of a driver for an obstacle in a large range, and can further improve a refined perception capability of the driver for an obstacle within a short distance. A combination of the two can improve a perception capability of the driver for a surrounding environment, and avoid scratching.

In a possible implementation, in addition to the view in the embodiment shown in FIG. 6, the human-machine interaction interface in this embodiment of this application further includes controls for selecting driving modes, and the driving modes include a travel mode and a parking mode. Therefore, two controls "Travel" and "Parking" are provided on the human-machine interaction interface.

In the travel mode, the human-machine interaction interface further includes controls for selecting assistance modes, and the assistance modes include an automatic mode and a manual mode. In this case, two controls "Auto" and "Manual" are provided on the human-machine interaction interface.

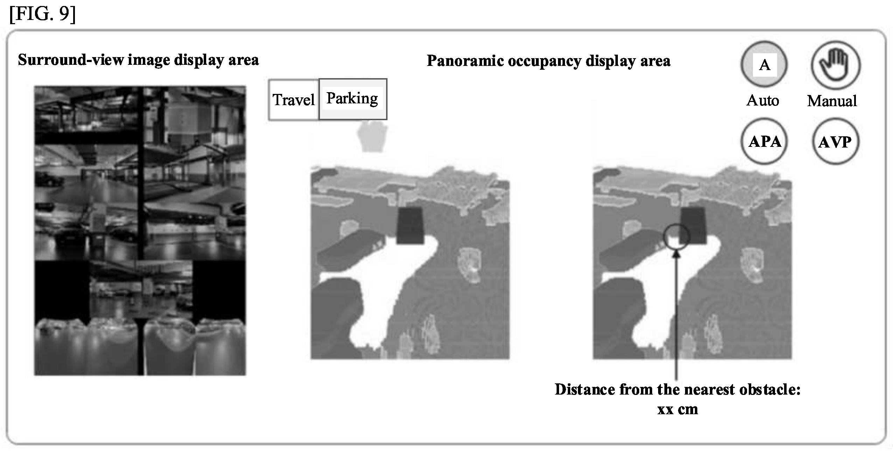

In the parking mode, the human-machine interaction interface further includes controls for selecting assistance modes, and the assistance modes include an automatic mode, a manual mode, an automated valet parking (Automated Valet Parking, AVP) mode, and an automatic parking assist (Auto Parking Assist, APA) mode. In this case, four controls "Auto", "Manual", "AVP", and "APA" are provided on the human-machine interaction interface. The automatic mode and the manual mode may be selected in a human driving situation (that is, a driver drives a vehicle). The APA mode and the AVP mode may be selected in an intelligent driving situation (that is, the driver starts automatic driving, and the vehicle autonomously completes a parking instruction. In this case, the driver may be in the vehicle or outside the vehicle). In the APA mode, an automatic parking function may be started. In a parking space parking process, for display logic of a panoramic occupancy display area, refer to the automatic mode in the human driving situation in the embodiment shown in FIG. 9.

In an embodiment, in a scenario of low-speed driving on a narrow road, an implementation process of the driving assistance method is as follows:
1. As shown in FIG. 6, the driver starts a low-speed travel and parking assistance function through a vehicle button or an icon on the central control screen of the vehicle, and then selects a "travel" mode on the human-machine interaction interface displayed on the central control screen.
2. The vehicle processes data collected by sensors (including a pinhole camera, a fisheye camera, a lidar, and a millimeter-wave radar) around the vehicle.
3. Based on the sensor data collected by the vehicle, perception prediction is performed in real time on a surrounding environment of the vehicle. In this embodiment of this application, this step is implemented by a perception prediction network. Input of the perception prediction network includes: (1) multi-modal perception information, including a pinhole image, a fisheye image, a laser point cloud, a millimeter-wave point cloud, or the like; (2) a plurality of pieces of display information (including a target area and a grid granularity). Output of the perception prediction network includes a plurality of pieces of occupancy grid information (including occupancy status and semantic information of grid cells at all coordinate positions in the target area).
   For an implementation process of the perception prediction network, refer to the embodiment shown in FIG. 5. Details are not described herein again.
4. The vehicle displays the plurality of pieces of occupancy grid information on the central control screen in real time.

As shown in FIG. 6, the human-machine interaction interface includes a surround-view image display area and a panoramic occupancy display area. The surround-view image display area mainly displays image information collected by the pinhole camera and the fisheye camera around the vehicle. The panoramic occupancy display area includes two areas: left and right. The left area displays a larger-range target area and coarse-grained occupancy grid perception information, providing the driver with a relatively complete distribution of surrounding obstacles for the driver. The right area displays a smaller-range target area and fine-grained occupancy grid perception information, providing the driver with a refined outline of a nearby obstacle, and intuitively displaying a distance between the vehicle and the nearby obstacle.

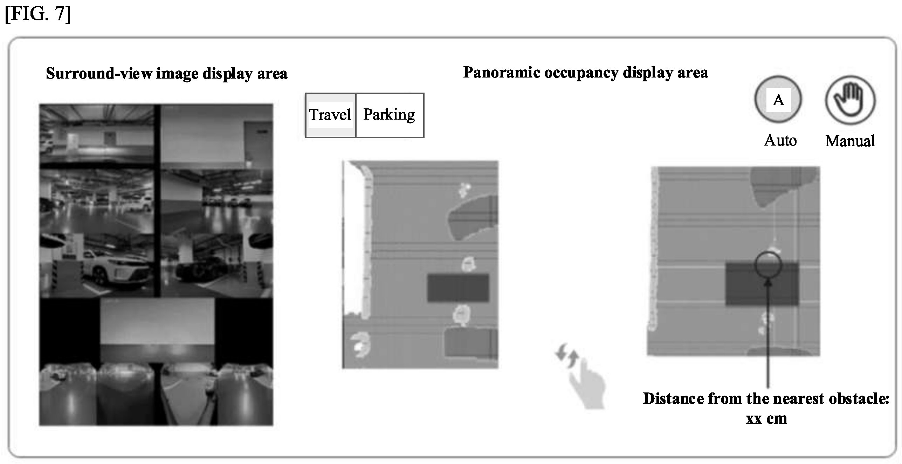

Optionally, the low-speed travel and parking assistance function in this embodiment of this application may support the driver in adjusting viewing angles of different grids. As shown in FIG. 7 (FIG. 7 is a diagram of switching a viewing angle on a human-machine interaction interface according to an embodiment of this application), the driver may perform dragging and rotation operations on the central control screen, to adjust a view to a top-down bird's eye view (Bird's Eye View, BEV). In this way, the driver may obtain a driving experience with a multi-perspective view of the distribution of surrounding obstacles.

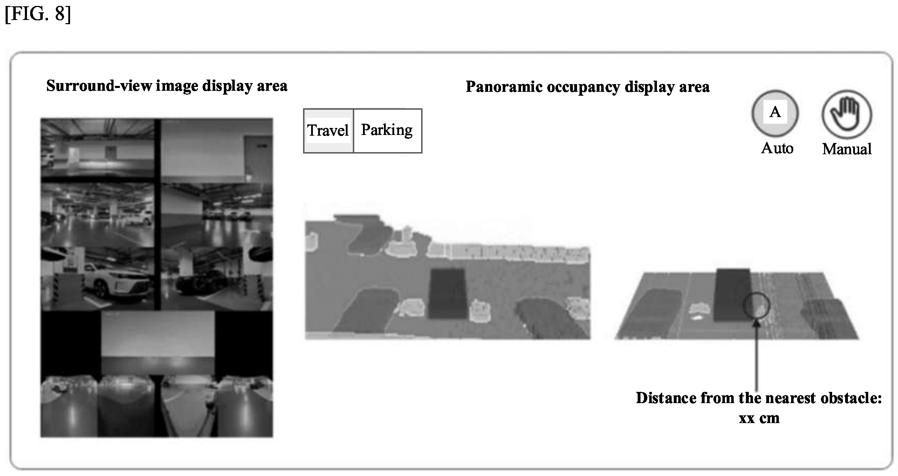

5. The low-speed travel and parking assistance function in this embodiment of this application may provide two manners for performing refined display on a specific area: an "auto" mode and a "manual" mode. As shown in FIG. 8 (FIG. 8 is a diagram of a refined mode according to an embodiment of this application), the two modes may be switched in an upper right corner of the human-machine interaction interface. The driver may tap a gesture button to switch to the "auto" mode.

Optionally, the low-speed travel and parking assistance function may be set to the "auto" mode by default. The "auto" mode may correspond to the case in which "the display information is preset information" in step 402.

In this embodiment, in the "travel" and "auto" modes, on the human-machine interaction interface of the central control screen, in a manner of a coarse grid granularity of 20 cm, occupancy grid information of an area (that is, a target area) within 6 m around the vehicle is displayed in a left area of the panoramic occupancy display area; and in a manner of a fine grid granularity of 5 cm, occupancy grid information of an area (that is, a target area) within 3 m around the vehicle is displayed in a right area of the panoramic occupancy display area.

The driver may know, through the occupancy grid information of obstacles displayed on the central control screen, which position of the vehicle has an obstacle, a distance between the vehicle and each obstacle, and which position of the vehicle is close to the obstacle, so as to take a preventive measure in advance to avoid scratching.

6. As shown in FIG. 8, the central control screen may further display a distance between a vehicle and an obstacle that is closest to the vehicle. In this way, the driver can more intuitively see how far the nearest obstacle is away, so as to take a corresponding driving means to avoid the obstacle and avoid scratching.

In this embodiment, the vehicle may display, on the central control screen at a plurality of grid granularities, occupancy grid conditions and semantic information of obstacles around the vehicle. In addition, in a travel and parking process of the vehicle, the vehicle adaptively adjusts a fineness of the human-machine interaction interface in real time according to environmental changes, so that the driver takes a preventive measure in advance to avoid scratching.

In another embodiment, in a narrow parking space parking scenario, an implementation process of the driving assistance method is as follows:
1. As shown in FIG. 9 (FIG. 9 is a diagram of a human-machine interaction interface of a central control screen according to an embodiment of this application), the driver starts a low-speed travel and parking assistance function through a vehicle button or an icon on the central control screen of a vehicle, and then selects a "parking" mode on the human-machine interaction interface displayed on the central control screen.

For steps 2 to 4 in this embodiment, refer to steps 2 to 4 of the embodiment shown in FIG. 6, and details are not described herein again.

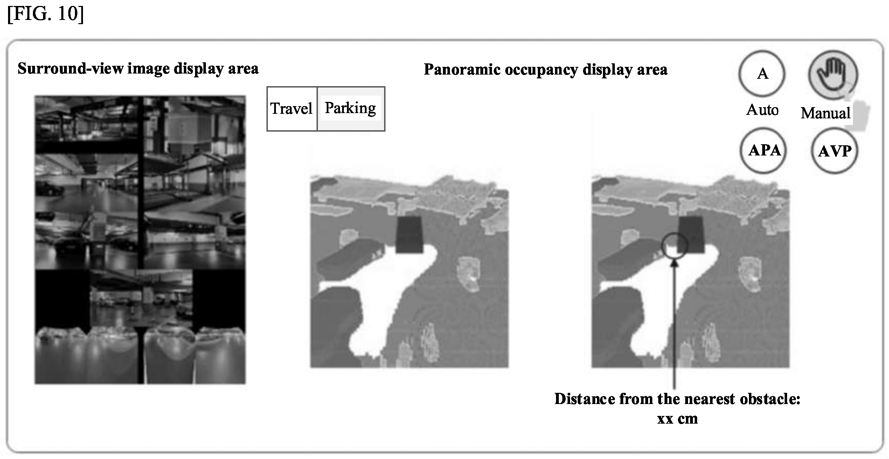

5. In a human driving situation, the low-speed travel and parking assistance function in this embodiment of this application may provide two manners for performing refined display of a specific area: an "auto" mode and a "manual" mode. As shown in FIG. 10 (FIG. 10 is a diagram of a refined mode according to an embodiment of this application), the two modes may be switched in an upper right corner of the human-machine interaction interface. The driver may tap a gesture button to switch to the "manual" mode. The "manual" mode may correspond to a case in which "the display information is dynamically generated based on an operation performed by the driver on the touchscreen" in step 402.

In this embodiment, in the "parking" and "manual" modes, as shown in FIG. 10, in an initial state, on the human-machine interaction interface of the central control screen, occupancy grid information of an area (that is, a target area) within 6 m around the vehicle is displayed in a 20 cm coarse grid granularity manner in a left area and a right area of the panoramic occupancy display area. The right area may be provided for the driver to perform a zoom operation on the right area.

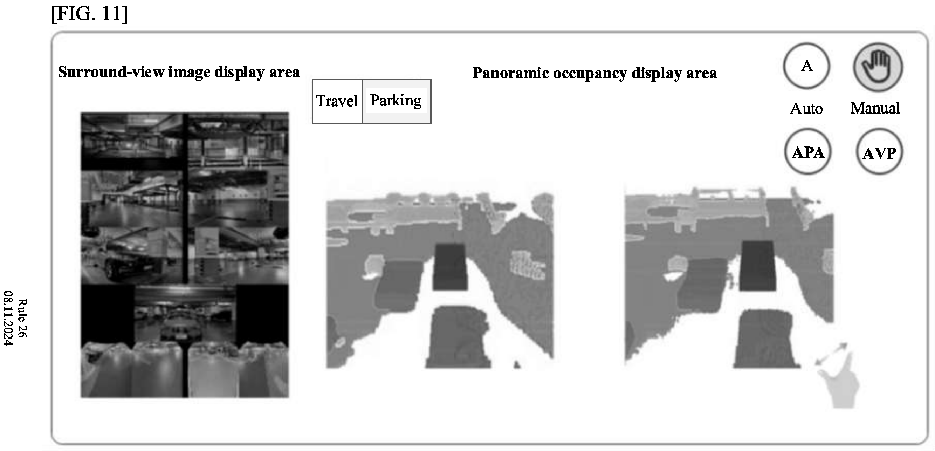

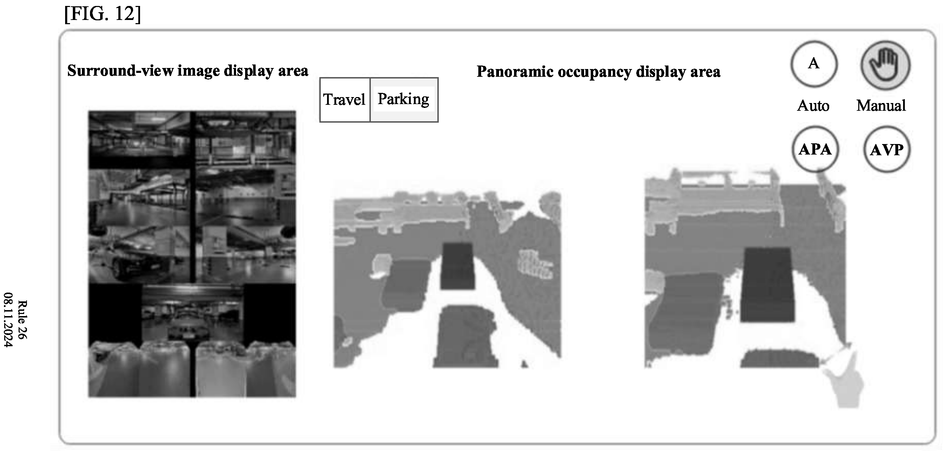

As shown in FIG. 11 and FIG. 12 (FIG. 11 and FIG. 12 are diagrams of a zoom operation in a manual mode according to an embodiment of this application), the driver may manually move and zoom the right area of the panoramic occupancy display area on the human-machine interaction interface. An in-vehicle infotainment extracts a zoomed area and a zoomed-out multiple based on the operation of the driver, and uses the zoomed area as a target area. The multiple may be used as a basis for obtaining a grid granularity. The driver positions the target area to an area (that is, the target area) within 4 m around the vehicle through the zoom operation. In this case, in the human-machine interaction interface of the central control screen, in a manner of a coarse grid granularity of 8 cm, occupancy grid information of the area (that is, the target area) within 4 m around the vehicle is displayed in the right area of the panoramic occupancy display area.

In this embodiment, the driver may manually determine the target area, and the vehicle may display, on the central control screen at a plurality of grid granularities, occupancy grid conditions and semantic information of obstacles around the vehicle, so that an area in which the driver is interested can be displayed in a refined manner. In addition, in a travel and parking process of the vehicle, the vehicle adaptively adjusts a fineness of the human-machine interaction interface in real time according to environmental changes, so that the driver takes a preventive measure in advance to avoid scratching.

In another embodiment, the in-vehicle infotainment may display the panoramic occupancy grid view on the human-machine interaction interface based on the panoramic occupancy grid information, where the panoramic occupancy grid information is obtained based on historical occupancy grid information of a driving environment of the vehicle and a driving trajectory of the vehicle.

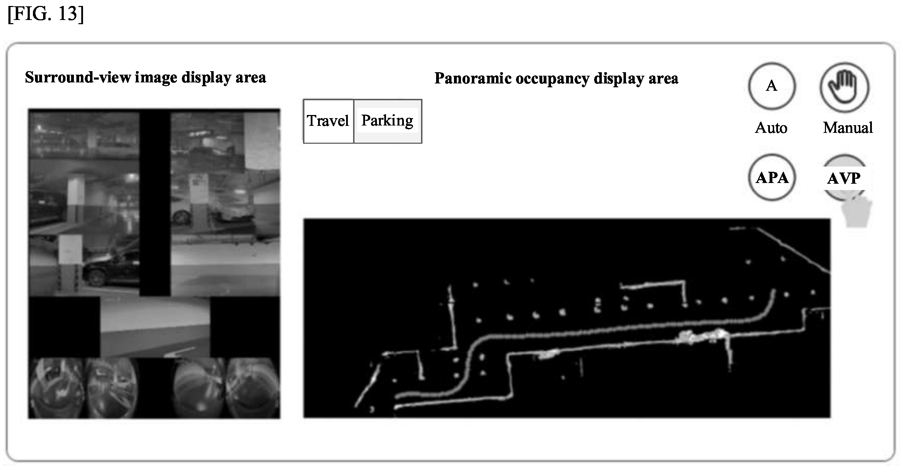

In an AVP garage/parking lot parking scenario, an implementation process of the driving assistance method is as follows:
1. As shown in FIG. 13 (FIG. 13 is a diagram of a human-machine interaction interface of a central control screen according to an embodiment of this application), after the vehicle enters a garage/parking lot, the driver starts a low-speed travel and parking assistance function through a vehicle button or an icon on the central control screen of the vehicle, and then selects a "parking" mode and an AVP mode on the human-machine interaction interface displayed on the central control screen.

For steps 2 and 3 in this embodiment may refer to steps 2 and 3 of the embodiment shown in FIG. 6, and details are not described herein again.

4. As the vehicle travels in the garage/parking lot, multi-frame result fusion is performed on predicted occupancy grid conditions and semantic information, so as to implement reconstruction of a panoramic static structure. The method includes the following steps.
(1) Remove the dynamic target based on the predicted semantic information, and retain only static structural obstacles.
(2) Convert remaining occupancy grids into a unified world coordinate system based on a vehicle posture.
(3) Accumulate occupancy grid information in the world coordinate system of historical N frames, and perform probability weighted fusion to obtain fused 3D occupancy grid information (corresponding to panoramic occupancy grid information).
(4) Convert the 3D occupancy grid information into a vehicle coordinate system at a current moment.
(5) Convert a historical trajectory point of the vehicle to the vehicle coordinate system at the current moment.

5. Display and output are performed in real time based on the 3D occupancy grid information in the vehicle coordinate system. Referring to the embodiments shown in FIG. 7 and FIG. 8, the driver may perform a drag and zoom operation on the human-machine interaction interface on the central control screen.

6. In the AVP mode, the driver may view a ground base reconstruction result, a driving trajectory, and a parking trajectory through a driving assistance application on a terminal device (for example, a mobile phone or a tablet), and a view of the vehicle may be the same as a view of the in-vehicle infotainment.

In this embodiment, panoramic perception may be performed on an entire garage/parking lot based on a change of a vehicle posture, to provide effective static environment information of all scenarios for parking or automatic parking of the driver.

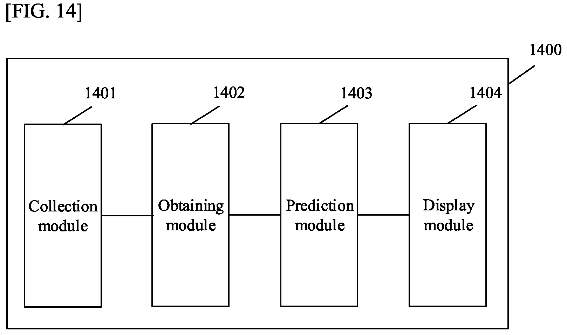

FIG. 14 is a diagram of a structure of a driving assistance apparatus 1400 according to this application. As shown in FIG. 14, the driving assistance apparatus 1400 in this embodiment may be applied to the foregoing terminal device. The driving assistance apparatus 1400 may include a collection module 1401, an obtaining module 1402, a prediction module 1403, and a display module 1404.

The collection module 1401 is configured to obtain multi-modal perception information, where the multi-modal perception information is collected by a plurality of sensors disposed on a vehicle; the obtaining module 1402 is configured to obtain a plurality of groups of display information, where the display information includes a to-be-displayed target area and a grid granularity; the prediction module 1403 is configured to perform perception prediction based on the multi-modal perception information and the plurality of groups of display information, to obtain a plurality of pieces of occupancy grid information, where the occupancy grid information is used to describe distribution of obstacles around the vehicle; and the display module 1404 is configured to display a plurality of occupancy grid views on a human-machine interaction interface based on the plurality of pieces of occupancy grid information.

In a possible implementation, the display module 1404 is specifically configured to display a first occupancy grid view, where the first occupancy grid view corresponds to a first target area and a first grid granularity; and to display a second occupancy grid view, where the second occupancy grid view corresponds to a second target area and a second grid granularity; where a range of the first target area is greater than a range of the second target area, and the first grid granularity is greater than the second grid granularity.

In a possible implementation, the first occupancy grid view includes grid cells corresponding to n1 obstacles, the second occupancy grid view includes grid cells corresponding to n2 obstacles, and both n1 and n2 are positive integers.

In a possible implementation, a grid cell of a first obstacle in the first occupancy grid view and a grid cell of a second obstacle in the second occupancy grid view are identified by using same information, the first obstacle and the second obstacle are a same obstacle, the n1 obstacles include the first obstacle, and the n2 obstacles all include the second obstacle.

In a possible implementation, a grid cell of a third obstacle in the second occupancy grid view is identified by using specific information, and the third obstacle is the one closest to the vehicle among the n2 obstacles.

In a possible implementation, the display module 1404 is further configured to display a panoramic occupancy grid view on the human-machine interaction interface based on panoramic occupancy grid information, where the panoramic occupancy grid information is obtained based on historical occupancy grid information of a driving environment of the vehicle and a driving trajectory of the vehicle.

In a possible implementation, the display information is preset information.

In a possible implementation, the display information is dynamically generated based on an operation performed by a driver on a touchscreen.

In a possible implementation, the operation includes at least one of the following operations: an operation of pressing the touchscreen by two fingers of the driver and sliding the two fingers outward or sliding the two fingers inward; or an operation of pressing the touchscreen by two fingers of the driver and performing rotation, translation, or dragging.

In a possible implementation, the human-machine interaction interface further includes a control for selecting a driving mode, and the driving mode includes one or more of the following modes: a travel mode or a parking mode.

In a possible implementation, in the travel mode, the human-machine interaction interface further includes a control for selecting an assistance mode, and the assistance mode includes one or more of the following modes: an automatic mode or a manual mode.

In a possible implementation, in the parking mode, the human-machine interaction interface further includes a control for selecting an assistance mode, and the assistance mode includes one or more of the following modes: an automatic mode, a manual mode, an automated valet parking AVP mode, or an automatic parking assist APA mode.

In a possible implementation, the prediction module 1403 is specifically configured to input the multi-modal perception information and the plurality of groups of display information into a pre-trained perception prediction network, to output the plurality of pieces of occupancy grid information.

In a possible implementation, functions implemented by the perception prediction network include: multi-modal feature fusion based on the multi-modal perception information; feature fusion based on a time sequence; and perception prediction based on the display information.

In a possible implementation, the perception prediction network includes one or more of the following networks: a pinhole network, a fisheye network, a point cloud network, or a multi-modal fusion network based on the multi-modal perception information. The pinhole network is configured to extract a visual feature and a spatial feature of a pinhole image collected by a pinhole camera, to obtain a pinhole 3D image feature. The fisheye network is configured to extract a visual feature and a spatial feature of a fisheye image collected by a fisheye camera, to obtain a fisheye 3D image feature. The point cloud network is configured to extract a 3D voxel feature corresponding to lidar and/or millimeter-wave radar data, to obtain a point cloud voxel feature. The multi-modal fusion network is configured to perform weighted fusion on the pinhole 3D image feature, the fisheye 3D image feature, and the point cloud voxel feature.

In a possible implementation, the perception prediction network further includes a temporal fusion network, where the temporal fusion network is configured to align, based on motion parameters of the vehicle, multi-frame 3D spatial features in a time sequence to a same coordinate system, and then perform multi-frame weighted fusion.

In a possible implementation, the perception prediction network further includes a feature enhancement network, and the feature enhancement network is configured to perform multi-scale feature fusion and a plurality of times of upsampling on a 3D spatial feature map, and re-fuse image features to implement auxiliary feature enhancement.

In a possible implementation, the perception prediction network further includes a dynamic resolution prediction network based on feedback of the display information, where the dynamic resolution prediction network is configured to perform cropping sampling and weighted fusion on a 3D spatial feature map with multi-scale resolution based on a target area and a grid granularity that are selected on the human-machine interaction interface, obtain a position feature through interpolation, and then predict occupancy and semantic information based on the position feature, to implement prediction of any resolution.

In a possible implementation, the plurality of sensors include a pinhole camera and a fisheye camera.

In a possible implementation, the plurality of sensors further include a lidar and/or a millimeter-wave radar.

The apparatus in this embodiment may be configured to perform the technical solution in the method embodiment shown in FIG. 4. Implementation principles and technical effect thereof are similar. Details are not described herein again.

In an implementation process, steps in the foregoing method embodiments can be implemented by using a hardware integrated logical circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

The memory in the foregoing embodiments may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions in this application essentially, or the part contributing to the conventional technology, or a part of the technical solutions may be implemented in a form of a software product. The computer software product is stored in a storage medium and includes several instructions for instructing a computer device (a personal computer, a server, a network device, or the like) to perform all or a part of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A driving assistance method, comprising:
obtaining multi-modal perception information, wherein the multi-modal perception information is collected by a plurality of sensors disposed on a vehicle;
obtaining a plurality of groups of display information, wherein the display information comprises a to-be-displayed target area and a grid granularity;
performing perception prediction based on the multi-modal perception information and the plurality of groups of display information, to obtain a plurality of pieces of occupancy grid information, wherein the occupancy grid information is used to describe distribution of obstacles around the vehicle; and
displaying a plurality of occupancy grid views on a human-machine interaction interface based on the plurality of pieces of occupancy grid information.

2. The method according to claim 1, wherein the displaying the plurality of occupancy grid views based on the plurality of pieces of occupancy grid information comprises:
displaying a first occupancy grid view, wherein the first occupancy grid view corresponds to a first target area and a first grid granularity; and
displaying a second occupancy grid view, wherein the second occupancy grid view corresponds to a second target area and a second grid granularity; wherein
a range of the first target area is greater than a range of the second target area, and the first grid granularity is greater than the second grid granularity.

3. The method according to claim 2, wherein the first occupancy grid view comprises grid cells corresponding to n1 obstacles, the second occupancy grid view comprises grid cells corresponding to n2 obstacles, and both n1 and n2 are positive integers.

4. The method according to claim 3, wherein a grid cell of a first obstacle in the first occupancy grid view and a grid cell of a second obstacle in the second occupancy grid view are identified by using same information, the first obstacle and the second obstacle are a same obstacle, the n1 obstacles comprise the first obstacle, and the n2 obstacles all comprise the second obstacle.

5. The method according to any one of claims 2 to 4, wherein a grid cell of a third obstacle in the second occupancy grid view is identified by using specific information, and the third obstacle is the one closest to the vehicle among the n2 obstacles.

6. The method according to any one of claims 1 to 5, further comprising:
displaying a panoramic occupancy grid view on the human-machine interaction interface based on panoramic occupancy grid information, wherein the panoramic occupancy grid information is obtained based on historical occupancy grid information of a driving environment of the vehicle and a driving trajectory of the vehicle.

7. The method according to any one of claims 1 to 6, wherein the display information is preset information.

8. The method according to any one of claims 1 to 6, wherein the display information is dynamically generated based on an operation performed by a driver on a touchscreen.

9. The method according to claim 8, wherein the operation comprises at least one of:
an operation of pressing the touchscreen by two fingers of the driver and sliding the two fingers outward or sliding the two fingers inward; or
an operation of pressing the touchscreen by two fingers of the driver and performing rotation, translation, or dragging.

10. The method according to any one of claims 1 to 9, wherein the human-machine interaction interface further comprises a control for selecting a driving mode, and the driving mode comprises one or more of the following modes: a travel mode or a parking mode.

11. The method according to claim 10, wherein in the travel mode, the human-machine interaction interface further comprises a control for selecting an assistance mode, and the assistance mode comprises one or more of the following modes: an automatic mode or a manual mode.

12. The method according to claim 10, wherein in the parking mode, the human-machine interaction interface further comprises a control for selecting an assistance mode, and the assistance mode comprises one or more of the following modes: an automatic mode, a manual mode, an automated valet parking AVP mode, or an automatic parking assist APA mode.

13. The method according to any one of claims 1 to 12, wherein the performing perception prediction based on the multi-modal perception information and the plurality of groups of display information, to obtain the plurality of pieces of occupancy grid information comprises:
inputting the multi-modal perception information and the plurality of groups of display information into a pre-trained perception prediction network, to output the plurality of pieces of occupancy grid information.

14. The method according to claim 13, wherein the perception prediction network comprises one or more of the following networks: a pinhole network, a fisheye network, a point cloud network, or a multi-modal fusion network based on the multi-modal perception information, wherein
the pinhole network is configured to extract a visual feature and a spatial feature of a pinhole image collected by a pinhole camera, to obtain a pinhole 3D image feature; the fisheye network is configured to extract a visual feature and a spatial feature of a fisheye image collected by a fisheye camera, to obtain a fisheye 3D image feature; the point cloud network is configured to extract a 3D voxel feature corresponding to lidar and/or millimeter-wave radar data, to obtain a point cloud voxel feature; and the multi-modal fusion network is configured to perform weighted fusion on the pinhole 3D image feature, the fisheye 3D image feature, and the point cloud voxel feature.

15. The method according to claim 13 or 14, wherein the perception prediction network further comprises a temporal fusion network, wherein the temporal fusion network is configured to align, based on motion parameters of the vehicle, multi-frame 3D spatial features in a time sequence to a same coordinate system, and then perform multi-frame weighted fusion.

16. The method according to any one of claims 13 to 15, wherein the perception prediction network further comprises a feature enhancement network, wherein the feature enhancement network is configured to perform multi-scale feature fusion and a plurality of times of upsampling on a 3D spatial feature map, and re-fuse image features to implement auxiliary feature enhancement.

17. The method according to any one of claims 13 to 16, wherein the perception prediction network further comprises a dynamic resolution prediction network based on feedback of the display information, wherein the dynamic resolution prediction network is configured to perform cropping sampling and weighted fusion on a 3D spatial feature map with multi-scale resolution based on a target area and a grid granularity that are selected on the human-machine interaction interface, obtain a position feature through interpolation, and then predict occupancy and semantic information based on the position feature, to implement prediction of any resolution.

18. The method according to any one of claims 1 to 17, wherein the plurality of sensors comprise a pinhole camera and a fisheye camera.

19. The method according to claim 18, wherein the plurality of sensors further comprise a lidar and/or a millimeter wave radar.

20. A driving assistance apparatus, comprising:
a collection module, configured to obtain multi-modal perception information, wherein the multi-modal perception information is collected by a plurality of sensors disposed on a vehicle;
an obtaining module, configured to obtain a plurality of groups of display information, wherein the display information comprises a to-be-displayed target area and a grid granularity;
a prediction module, configured to perform perception prediction based on the multi-modal perception information and the plurality of groups of display information, to obtain a plurality of pieces of occupancy grid information, wherein the occupancy grid information is used to describe distribution of obstacles around the vehicle; and
a display module, configured to display a plurality of occupancy grid views on a human-machine interaction interface based on the plurality of pieces of occupancy grid information.

21. The apparatus according to claim 20, wherein the display module is specifically configured to: display a first occupancy grid view, wherein the first occupancy grid view corresponds to a first target area and a first grid granularity; and display a second occupancy grid view, wherein the second occupancy grid view corresponds to a second target area and a second grid granularity, wherein a range of the first target area is greater than a range of the second target area, and the first grid granularity is greater than the second grid granularity.

22. The apparatus according to claim 21, wherein the first occupancy grid view comprises grid cells corresponding to n1 obstacles, the second occupancy grid view comprises grid cells corresponding to n2 obstacles, and both n1 and n2 are positive integers.

23. The apparatus according to claim 22, wherein a grid cell of a first obstacle in the first occupancy grid view and a grid cell of a second obstacle in the second occupancy grid view are identified by using same information, the first obstacle and the second obstacle are a same obstacle, the n1 obstacles comprise the first obstacle, and the n2 obstacles all comprise the second obstacle.

24. The apparatus according to any one of claims 21 to 23, wherein a grid cell of a third obstacle in the second occupancy grid view is identified by using specific information, and the third obstacle is the one closest to the vehicle among the n2 obstacles.

25. The apparatus according to any one of claims 20 to 24, wherein the display module is further configured to display a panoramic occupancy grid view on the human-machine interaction interface based on panoramic occupancy grid information, wherein the panoramic occupancy grid information is obtained based on historical occupancy grid information of a driving environment of the vehicle and a driving trajectory of the vehicle.

26. The apparatus according to any one of claims 20 to 25, wherein the display information is preset information.

27. The apparatus according to any one of claims 20 to 25, wherein the display information is dynamically generated based on an operation performed by a driver on a touchscreen.

28. The apparatus according to claim 27, wherein the operation comprises at least one of:
an operation of pressing the touchscreen by two fingers of the driver and sliding the two fingers outward or sliding the two fingers inward; or
an operation of pressing the touchscreen by two fingers of the driver and performing rotation, translation, or dragging.

29. The apparatus according to any one of claims 20 to 28, wherein the human-machine interaction interface further comprises a control for selecting a driving mode, and the driving mode comprises one or more of the following modes: a travel mode or a parking mode.

30. The apparatus according to claim 29, wherein in the travel mode, the human-machine interaction interface further comprises a control for selecting an assistance mode, and the assistance mode comprises one or more of the following modes: an automatic mode or a manual mode.

31. The apparatus according to claim 29, wherein in the parking mode, the human-machine interaction interface further comprises a control for selecting an assistance mode, and the assistance mode comprises one or more of the following modes: an automatic mode, a manual mode, an automated valet parking AVP mode, or an automatic parking assist APA mode.

32. The apparatus according to any one of claims 20 to 31, wherein the prediction module is specifically configured to input the multi-modal perception information and the plurality of groups of display information into a pre-trained perception prediction network, to output the plurality of pieces of occupancy grid information.

33. The apparatus according to claim 32, wherein the perception prediction network
comprises one or more of the following networks: a pinhole network, a fisheye network, a point cloud network, or a multi-modal fusion network based on the multi-modal perception information, wherein
the pinhole network is configured to extract a visual feature and a spatial feature of a pinhole image collected by a pinhole camera, to obtain a pinhole 3D image feature; the fisheye network is configured to extract a visual feature and a spatial feature of a fisheye image collected by a fisheye camera, to obtain a fisheye 3D image feature; the point cloud network is configured to extract a 3D voxel feature corresponding to lidar and/or millimeter-wave radar data, to obtain a point cloud voxel feature; and the multi-modal fusion network is configured to perform weighted fusion on the pinhole 3D image feature, the fisheye 3D image feature, and the point cloud voxel feature.

34. The apparatus according to claim 32 or 33, wherein the perception prediction network further comprises a temporal fusion network, wherein the temporal fusion network is configured to align, based on motion parameters of the vehicle, multi-frame 3D spatial features in a time sequence to a same coordinate system, and then perform multi-frame weighted fusion.

35. The apparatus according to any one of claims 32 to 34, wherein the perception prediction network further comprises a feature enhancement network, wherein the feature enhancement network is configured to perform multi-scale feature fusion and a plurality of times of upsampling on a 3D spatial feature map, and re-fuse image features to implement auxiliary feature enhancement.

36. The apparatus according to any one of claims 32 to 35, wherein the perception prediction network further comprises a dynamic resolution prediction network based on feedback of the display information, wherein the dynamic resolution prediction network is configured to perform cropping sampling and weighted fusion on a 3D spatial feature map with multi-scale resolution based on a target area and a grid granularity that are selected on the human-machine interaction interface, obtain a position feature through interpolation, and then predict occupancy and semantic information based on the position feature, to implement prediction of any resolution.

37. The apparatus according to any one of claims 20 to 36, wherein the plurality of sensors comprise a pinhole camera and a fisheye camera.

38. The apparatus according to claim 37, wherein the plurality of sensors further comprise a lidar and/or a millimeter wave radar.

39. An electronic device, comprising:
one or more processors; and
a memory, configured to store one or more programs; wherein
when the one or more programs are executed by the one or more processors, the one or more processors are enabled to implement the method according to any one of claims 1 to 19.

40. A computer-readable storage medium, comprising a computer program, wherein when the computer program is executed on a computer, the computer is enabled to perform the method according to any one of claims 1 to 19.

41. A computer program product, wherein the computer program product comprises computer program code, and when the computer program code is run on a computer, the computer is enabled to perform the method according to any one of claims 1 to 19.
